# NEUE EUROPÄISCHE PATENTSCHRIFT

(11) **EP 1 491 369 B2**
(45) Veröffentlichungstag und Bekanntmachung des Hinweises auf die Entscheidung über den Einspruch: **15.01.2025**
(45) Hinweis auf die Patenterteilung: 16.01.2019
(21) Anmeldenummer: 04007905.5
(22) Anmeldetag: 01.04.2004
(51) Int. Cl.: B60D 1/24, B60D 1/06, B60D 1/54

(54) **Anhängekupplung**
Trailer hitch
Attelage pour vehicules

(30) Priorität: 26.06.2003 DE 10329622
(43) Veröffentlichungstag der Anmeldung: 29.12.2004
(73) Patentinhaber: ACPS Automotive GmbH, 74379 Ingersheim (DE)
(72) Erfinder: Rimmelspacher, Bernhard, 76287 Rheinstetten (DE); Möhring, Siegfried, 71696 Möglingen (DE); Fischer, Michael, 71679 Asperg (DE); Riehle, Jörg, 71679 Asperg (DE)
(74) Vertreter: Hoeger, Stellrecht & Partner Patentanwälte mbB

(56) Entgegenhaltungen:
- EP-A1- 0 288 366
- EP-A1- 1 288 026
- EP-A1- 1 428 697
- EP-A1- 1 475 253
- EP-A2- 1 084 870
- EP-A2- 1 090 782
- EP-A2- 1 142 732
- WO-A1-01/32451
- DE-A1- 10 004 523
- DE-A1- 10 117 656
- DE-A1- 10 243 044
- DE-A1- 19 521 896
- DE-A1- 19 826 618
- DE-A1- 19 858 978
- DE-A1- 19 859 961
- DE-A1- 3 328 524
- FR-A1- 2 450 167
- FR-A1- 2 476 554
- US-A- 5 322 313
- US-A- 5 322 313
- US-A1- 2003 075 900

## Beschreibung

Die Erfindung betrifft eine Anhängekupplung für Kraftfahrzeuge umfassend einen Kugelhals, der an einem Ende eine Kupplungskugel und an einem anderen Ende ein Lagerelement trägt, eine fahrzeugfeste Lageraufnahme, an welcher das Lagerelement mit dem Kugelhals um eine Achse zwischen einer Arbeitsstellung und einer Ruhestellung verschwenkbar gelagert ist, eine Formschlussfixiereinrichtung, welche das Lagerelement relativ zur Lageraufnahme zumindest in der Arbeitsstellung formschlüssig fixiert, einen Fixierzustand, in welchem die Formschlussfixiereinrichtung wirksam ist und einen Schwenkzustand, in welchem bei nicht vorhandener Einwirkung gegen ein Verschwenken unstabilisierte Drehstellungen des Lagerelements vorlegen.

Derartige Anhängekupplungen sind aus der EP 0 799 732 A1 bekannt. Bei diesen Anhängekupplungen liegen beispielsweise dann, wenn ein manuelles Verschwenken des Kugelhalses vorgesehen ist, in dem Schwenkzustand gegen ein Verschwenken unstabilisierte Drehstellungen des Lagerelements vor. Bei diesen Anhängekupplungen können aber auch selbst dann, wenn ein motorischer Antrieb vorgesehen ist, im Schwenkzustand gegen ein Verschwenken unstabilisierte Drehstellungen vorliegen, wenn der Antrieb nicht selbsthemmend erfolgt.

Die US 2003/0075900 A1 offenbart zwei Ausführungsbeispiele.

Bei dem ersten Ausführungsbeispiel ist vorgesehen, dass der Lagerkopf in der Lösestellung um den Lagerzapfen frei verschwenkbar ist.

Es ist daher bei diesen Anhängekupplungen problematisch, die Formschlussfixiereinrichtung in ihre wirksame Stellung, beispielsweise in die Arbeitsstellung, zu bringen, da eine nennenswerte Wahrscheinlichkeit dafür besteht, dass die für das Überführen der Formschlussfixiereinrichtung in ihre wirksame Stellung erforderliche Drehstellung des Lagerelements während der für das Überführen benötigten Zeit nicht aufrecht erhalten bleibt.

Aus der US 5,322,313 A ist eine Anhängekupplung bekannt, bei welcher auf einem Drehteller mehrere Kupplungskugeln zur Verfügung stehen.

Aus der DE 101 17 656 A1 und der EP 0 288 366 A1 sind weitere wegschwenkbare Anhängekupplungen bekannt.

Der Erfindung liegt daher die Aufgabe zugrunde, eine Anhängekupplung der gattungsgemäßen Art derart zu verbessern, dass die Formschlussfixiereinrichtung zuverlässig in ihre zur Fixierung der Arbeitsstellung wirksame Stellung bringbar ist.

Diese Aufgabe wird bei einer Anhängekupplung der eingangs beschriebenen Art erfindungsgemäß dadurch gelöst, dass eine Vorpositioniereinrichtung vorgesehen ist, welche das Lagerelement beim Verschwenken in Richtung der Arbeitsstellung in einer eine erste Endstellung darstellenden Drehstellung gegen ein weiteres Verschwenken stabilisiert, und dass die erste Endstellung derart angeordnet ist, dass von dieser ausgehend eine eine erste Formschlussstellung darstellende Drehstellung erreicht wird, in welcher ein Übergang der Formschlussfixiereinrichtung in ihre zur Fixierung der Arbeitsstellung wirksame Stellung erfolgt.

Der Vorteil der erfindungsgemäßen Lösung ist darin zu sehen, dass mit dieser Vorpositioniereinrichtung eine vorteilhafte Möglichkeit besteht, das Lagerelement in der ersten Stellung so lange stabilisiert zu halten, dass die Formschlussfixiereinrichtung in ihre wirksame Stellung überführbar ist.

Das heißt, dass der Anspruch 1 definiert, dass eine freie Drehbarkeit besteht, bis auf die zu erreichende erste Endstellung, in welcher durch die Vorpositioniereinrichtung der Lagerkopf gegen ein Verschwenken stabilisierbar ist.

Darüber hinaus bietet eine derartige Lösung, insbesondere bei manuell verschwenkbarem Kugelhals, für den Bediener die Möglichkeit, zuverlässig die erste Endstellung zu erreichen, von welcher ausgehend zeitunkritisch die Formschlußfixiereinrichtung in ihre wirksame Stellung bringbar ist.

Bei der erfindungsgemäßen Anhängekupplung kann die Formschlußfixiereinrichtung in unterschiedlicher Art und Weise ausgebildet sein. Beispielsweise wäre es denkbar, die Formschlußfixiereinrichtung derart auszubilden, daß Elemente der Formschlußfixiereinrichtung relativ zum Lagerelement und/oder zur Lageraufnahme beweglich sind, um die Formschlußfixiereinrichtung in ihren wirksamen oder unwirksamen Zustand zu bringen.

Eine konstruktiv besonders einfache und günstige Lösung sieht jedoch vor, daß das Lagerelement zwischen einer Fixierstellung, in welcher die Formschlußfixiereinrichtung im Fixierzustand wirksam ist, und einer Schwenkstellung, in welcher die Formschlußfixiereinrichtung unwirksam ist, in Richtung der Achse verschiebbar ist. Diese Lösung ist insbesondere dann vorteilhaft, wenn die Formschlußfixiereinrichtung das Lagerelement spielfrei relativ zur Lageraufnahme fixieren soll, da damit nur ein bewegliches Element, nämlich das Lagerelement, vorgesehen ist, welches sich in einfacher Art und Weise spielfrei an der Lageraufnahme festlegen läßt.

Das Lagerelement könnte hierbei manuell zwischen der Fixierstellung und der Schwenkstellung bewegbar sein.

Eine besonders vorteilhafte Lösung sieht jedoch vor, daß das Lagerelement durch eine Verschiebeeinrichtung in Richtung der Achse verschiebbar ist.

Prinzipiell ist es denkbar, die Anhängekupplung so auszubilden, daß das Lagerelement aus der Schwenkstellung herauszubewegen ist, um eine Wirksamkeit der Vorpositioniereinrichtung zu erreichen.

Eine besonders günstige Lösung sieht jedoch vor, daß die Vorpositionierung in der Schwenkstellung wirksam ist.

Besonders günstig ist es dabei, wenn die Formschlußfixiereinrichtung durch Bewegen des in der ersten Endstellung positionierten Lagerelements von der Schwenkstellung in die Fixierstellung zur Wirkung bringbar ist.

Um sicherzustellen, daß die erste Endstellung beim Bewegen des Lagerelements von der Schwenkstellung in die Fixierstellung so lange aufrecht erhalten bleibt wie erforderlich, ist vorzugsweise vorgesehen, daß die Vorpositioniereinrichtung derart ausgebildet ist, daß diese zumindest über einen Teil des Weges von der Schwenkstellung in die Fixierstellung die Verschiebung des Lagerelements unter Beibehaltung der ersten Endstellung zuläßt.

Prinzipiell wäre es denkbar, das Lagerelement zum Lösen von der Fixierstellung in die Schwenkstellung zu bewegen und dann die Schwenkbewegung durch Überwinden der Wirkung der Vorpositioniereinrichtung aufzuheben.

Eine derartige Lösung ist jedoch wenig komfortabel und bedienerfreundlich.

Aus diesem Grund sieht eine besonders günstige Lösung vor, daß das Lagerelement beim Bewegen in Richtung der Schwenkachse von der Fixierstellung in die Schwenkstellung in eine eine erste Freigabestellung darstellende Drehstellung bringbar ist, ausgehend von welcher das Lagerelement unbeeinflusst von der Vorpositioniereinrichtung schwenkbar ist.

Diese vorteilhafte Lösung läßt sich beispielsweise dadurch realisieren, daß dafür Sorge getragen wird, daß die Vorpositioniereinrichtung dann unwirksam ist, wenn das Lagerelement von der Fixierstellung in die Schwenkstellung bewegt wird. Beispielsweise könnte in diesem Fall ein Element der Vorpositioniereinrichtung in eine unwirksame Stellung bewegt werden, um die Wirkung der Vorpositioniereinrichtung bei Erreichen der Freigabestellung aufzuheben. In diesem Fall könnte dann auch die erste Freigabestellung mit der ersten Endstellung identisch sein.

Besonders günstig ist es jedoch, wenn die erste Freigabestellung eine von der ersten Endstellung abweichende Drehstellung ist. In diesem Fall ist es nicht notwendig, die Vorpositioniereinrichtung aktiv unwirksam zu machen, da die der Freigabestellung entsprechende Drehstellung nicht mit der der Endstellung entsprechenden Drehstellung zusammenfällt und somit der Einfluss der Vorpositioniereinrichtung auf die erste Endstellung begrenzt werden kann, so daß in der ersten Freigabestellung keinerlei Einfluss der Vorpositioniereinrichtung mehr vorhanden ist.

Insbesondere dann, wenn der Kugelhals und das Lagerelement schwerkraftbedingt verschwenkbar sind, sieht eine besonders einfache Lösung vor, daß die erste Freigabestellung eine in Richtung einer schwerkraftbedingten Schwenkrichtung von der ersten Stellung abweichend angeordnete Drehstellung ist.

Darüber hinaus ist es auch denkbar, dass die erste Formschlussstellung und die erste Endstellung zusammenfallende Drehstellungen sind. Dies erschwert es jedoch wiederum konstruktiv die erste Freigabestellung als von der ersten Endstellung abweichende Drehstellung auszubilden. Aus diesem Grund sieht die erfindungsgemäße Lösung vor, dass die erste Formschlussstellung eine von der ersten Endstellung abweichende Drehstellung ist, so dass sich die erste Endstellung und die erste Formschlussstellung einfach voneinander trennen lassen.

Eine konstruktiv besonders günstige Lösung sieht vor, daß die Formschlußstellung eine in Richtung einer schwerkraftbedingten Schwenkrichtung von der ersten Endstellung abweichend angeordnete Drehstellung ist.

Eine weitere vorteilhafte Lösung sieht vor, daß die Freigabestellung eine in Richtung der schwerkraftbedingten Schwenkrichtung von der Formschlußstellung abweichend angeordnete Drehstellung ist.

Eine weitere vorteilhafte Ausführungsform einer erfindungsgemäßen Anhängekupplung sieht vor, daß mit der Vorpositioniereinrichtung das Lagerelement beim Verschwenken in Richtung der Ruhestellung in einer eine zweite Endstellung darstellenden Drehstellung festlegbar ist und daß die zweite Endstellung derart angeordnet ist, daß von dieser ausgehend eine eine zweite Formschlußstellung darstellende Drehstellung erreichbar ist, in welcher die Formschlußfixiereinrichtung in ihre zur Fixierung der Ruhestellung wirksame Stellung bringbar ist.

Der Vorteil dieser Lösung ist darin zu sehen, daß somit auch zum Erreichen der Ruhestellung eine durch die Vorpositioniereinrichtung festlegbare Endstellung vorhanden ist, so daß auch das Erreichen der Ruhestellung mit dem eingangs im Zusammenhang mit der Arbeitsstellung genannten Vorteilen erreichbar ist.

Besonders günstig ist es, wenn die Formschlußfixiereinrichtung durch Bewegen des in der zweiten Endstellung positionierten Lagerelements von der Schwenkstellung in die Fixierstellung zur Wirkung bringbar ist.

Ferner sieht eine günstige Lösung vor, daß die Vorpositioniereinrichtung derart ausgebildet ist, daß diese zumindest über einen Teil des Weges von der Schwenkstellung in die Fixierstellung die Verschiebung des Lagerelements unter Beibehaltung der zweiten Endstellung zuläßt.

Ferner ist es weiterhin günstig, wenn das Lagerelement beim Bewegen in Richtung der Achse von der Fixierstellung in die Schwenkstellung in eine zweite Freigabestellung darstellende Drehstellung bringbar ist, ausgehend von welcher das Lagerelement unbeeinflusst von der Vorpositioniereinrichtung schwenkbar ist.

Hinsichtlich der zweiten Freigabestellung und der zweiten Endstellung besteht ebenfalls die Möglichkeit, diese vorzusehen, daß beide zusammenfallen. Aus denselben Gründen, wie im Zusammenhang mit der Arbeitsstellung erläutert, ist es vorteilhaft, wenn die zweite Freigabestellung eine von der zweiten Endstellung abweichende Drehstellung ist.

Vorzugsweise ist dabei die zweite Freigabestellung eine in Richtung einer schwerkraftbedingten Schwenkrichtung von der zweiten Endstellung abweichende Drehstellung.

Ferner ist es außerdem vorteilhaft, wenn auch die zweite Formschlußstellung eine von der zweiten Endstellung abweichende Drehstellung ist.

Besonders günstig ist es hierbei, wenn die zweite Formschlußstellung eine in Richtung einer schwerkraftbedingten Schwenkrichtung von der zweiten Endstellung abweichend angeordnete Drehstellung ist.

Außerdem ist es von Vorteil, wenn die zweite Freigabestellung eine in Richtung der schwerkraftbedingten Schwenkrichtung von der zweiten Formschlußstellung abweichend angeordnete Drehstellung ist.

Hinsichtlich der Ausbildung der Vorpositioniereinrichtung wurden bislang keine näheren Angaben gemacht.

So ist es beispielsweise denkbar, die Vorpositioniereinrichtung als die Endstellung des Lagerelements durch Kraftschluß stabilisierende Einrichtung auszubilden.

Dabei bestehende unterschiedlichste Möglichkeiten einer kraftschlüssigen Festlegung des Lagerelements. Hinsichtlich einer definierten und auch für eine Bedienungsperson einfach nachvollziehbaren Positionierung des Lagerelements in der jeweiligen Endstellung hat es sich jedoch als besonders vorteilhaft erwiesen, wenn die Vorpositioniereinrichtung die jeweilige Endstellung des Lagerelements durch Formschluß stabilisiert.

Dies läßt sich besonders günstig dadurch realisieren, daß die Vorpositioniereinrichtung mindestens ein erstes und ein zweites Rastelement aufweist, welche zum Stabilisieren der jeweiligen Endstellung in Wirkverbindung bringbar sind.

Um mit derselben Vorpositioniereinrichtung das Lagerelement sowohl in der ersten und der zweiten Endstellung positionieren zu können, ist vorzugsweise vorgesehen, daß die Vorpositionierung mindestens ein weiteres Rastelement aufweist, welche zum Stabilisieren des Lagerelements in der anderen Endstellung in Wirkverbindung bringbar ist.

Dabei ist es besonders günstig, wenn eines der zusammenwirkenden Rastelemente einen in eine Raststellung und aus dieser heraus bewegbaren Rastkörper umfaßt und das andere der zusammenwirkenden Rastelemente als eine mit dem Rastkörper zusammenwirkende Rastkörperaufnahme ausgebildet ist.

Um ein sicheres Einrasten des Rastkörpers zu erreichen ist vorzugsweise vorgesehen, daß der Rastkörper federbeaufschlagt bewegbar ausgebildet ist.

Dabei kann der Rastkörper vorzugsweise als Rastklinke oder Rastkugel ausgebildet sein.

Eine andere Ausführungsform einer erfindungsgemäßen Vorpositionierung arbeitet nicht mit Rastelementen, sondern ist so ausgebildet, daß durch eine Bewegung des Lagerelements von der Schwenkstellung in Richtung der Fixierstellung bis zu einer Positionierstellung zur Wirkung bringbar ist.

Auch in diesem Fall könnte beispielsweise die Wirkung der Vorpositioniereinrichtung über Kraftschluß erfolgen.

Eine besonders günstige Lösung einer derartigen Vorpositioniereinrichtung sieht vor, daß diese zwei durch die Bewegung in die Positionierstellung formschlüssig in Eingriff bringbare Positionierelemente umfaßt.

Um bei einer derartigen Vorpositioniereinrichtung die Bewegung in die Positionierstellung nicht durch eine Bedienungsperson auslösen zu lassen, ist vorzugsweise die Vorpositioniereinrichtung so ausgebildet, daß diese eine Verschiebeeinheit umfaßt, welche selbsttätig eine Verschiebung des Lagerelements in die Positionierstellung auslöst, wenn die Drehstellung des Lagerelements ein Bewegen des Lagerelements in die Positionierstellung zuläßt.

Das heißt, daß bei dieser vorteilhaften Ausführungsform der erfindungsgemäßen Lösung lediglich eine Einwirkung auf den Kugelhals und das Lagerelement dahingehend erforderlich ist, daß diese in eine Drehstellung gebracht werden, aus welcher heraus das Lagerelement in die Positionierstellung überführbar ist, daß jedoch das Verschieben in die Positionierstellung selbsttätig ausgelöst wird.

Vorzugsweise erfolgt das Auslösen des Verschiebens des Lagerelements in die Positionierstellung nicht nur in einer einzigen Drehstellung, sondern die Positioniereinrichtung ist zweckmäßigerweise so ausgebildet, daß sie das Bewegen des Lagerelements in die Positionierstellung dann auslöst, wenn die Drehstellung des Lagerelements innerhalb eines Einfangbereichs liegt.

Insbesondere dann, wenn die erfindungsgemäße Anhängekupplung ohnehin eine motorisch angetriebene Verschiebeeinrichtung aufweist, ist es besonders günstig, wenn die Positioniereinrichtung eine Steuereinheit aufweist, welche zum Verschieben des Lagerelements in die Positionierstellung die Verschiebeeinrichtung ansteuert.

Das heißt, daß bei dieser Lösung der ohnehin vorhandene Antrieb zum Verschieben des Lagerelements noch zusätzlich dazu ausgenutzt werden kann, um das Lagerelement von der Schwenkstellung in die Positionierstellung zu überführen und somit das Lagerelement in der jeweiligen Endstellung festzulegen.

Eine besonders vorteilhafte Ausführungsform einer erfindungsgemäßen Anhängekupplung sieht ferner eine Ausrichteinrichtung vor, mit welcher das Lagerelement zum Wirksamwerden der Formschlußfixiereinrichtung in die erste Formschlußstellung bringbar ist.

Eine derartige Ausrichteinrichtung hat den großen Vorteil, daß mit dieser selbst bei von der Formschlußstellung abweichender Endstellung in einfacher Weise die Drehstellung des Lagerelements exakt an die erforderliche Formschlußstellung zum in Wirkverbindung bringen der Formschlußfixiereinrichtung angepaßt werden kann.

Zweckmäßigerweise ist dabei die Ausrichteinrichtung so ausgebildet, daß sie unter Beibehaltung der ersten Formschlußstellung eine Bewegung des Lagerelements in Richtung der Schwenkachse zuläßt.

Ferner sieht eine weitere vorteilhafte Ausführungsform eine Ausrichteinrichtung vor, mit welcher das Lagerelement zum Wirksamwerden der Formschlußfixiereinrichtung in zweite Formschlußstellung bringbar ist.

Auch in diesem Fall ist vorzugsweise die Ausrichteinrichtung so ausgebildet, daß sie unter Beibehaltung der Formschlußstellung eine Bewegung des Lagerelements in Richtung der Fixierstellung zuläßt.

Hinsichtlich der Wirksamkeit der Ausrichteinrichtung in Relation zur Vorpositionierung ist vorzugsweise vorgesehen, daß bei einer Bewegung des in der jeweiligen Endstellung stehenden Lagerelements von der Schwenkstellung in Richtung der Fixierstellung die Ausrichteinrichtung wirksam wird, bevor die Vorpositioniereinrichtung ihre Wirkung verliert.

Darüber hinaus ist vorzugsweise vorgesehen, daß die Ausrichteinrichtung derart ausgebildet ist, daß beim Übergang des Lagerelements von der Fixierstellung in die Schwenkstellung das Lagerelement die Freigabestellung erreicht.

Hinsichtlich der Ausbildung der Ausrichteinrichtung sind die unterschiedlichsten Möglichkeiten denkbar. So sieht eine Möglichkeit vor, daß die Ausrichteinrichtung zum Vorgeben jeder der Formschlußstellungen ein Ausrichtelement und eine an diesem anlegbare Ausrichtfläche umfaßt.

Vorzugsweise ist dabei vorgesehen, daß die Ausrichtfläche durch eine schwerkraftbedingte Schwenkbewegung des Lagerelements an dem Ausrichtelement anlegbar ist.

Die Ausrichtfläche könnte eine separate, beispielsweise an einem Vorsprung vorgesehene Fläche sein. Eine konstruktiv besonders einfache Lösung sieht jedoch vor, daß die Ausrichtfläche durch eine Wand einer Ausnehmung gebildet ist, wobei sich eine derartige Ausnehmung insbesondere in das Schwenkelement hinein erstreckt.

Die Ausrichtfläche selbst kann lokal unabhängig von den Formschlußelementen angeordnet sein.

Eine konstruktiv zweckmäßige Lösung sieht jedoch vor, daß die Ausrichtfläche mit einem Teilbereich von einem der Formschlußelemente fluchtet. Das heißt, daß die Ausrichtfläche so angeordnet ist, daß sie eine Fortsetzung eines Teilbereichs eines Formschlußelements, insbesondere einer Wandfläche desselben darstellt.

Eine derartige Lösung kommt insbesondere in all den Fällen zum Einsatz, in welchen das an der Ausrichtfläche anzulegende Ausrichtelement ebenfalls auf einem Formschlußelement sitzt, Teil eines derartigen Formschlußelements ist oder durch das jeweilige Formschlußelement selbst verkörpert wird.

Im einfachsten Fall ist die Ausrichteinrichtung so ausgebildet, daß sie nur in der Lage ist, die Formschlußstellung vorzugeben.

Es ist aber auch denkbar, die Ausrichteinrichtung so auszubilden, daß mit der Ausrichteinrichtung das Lagerelement in Richtung der jeweiligen Formschlußstellung verschwenkbar ist, insbesondere dann, wenn das Lagerelement in Richtung der Fixierstellung bewegt wird.

Damit dient die Ausrichteinrichtung nicht nur dazu, die Formschlußstellung festzulegen, sondern kann auch dazu eingesetzt werden, aktiv schwenkend auf das Lagerelement einzuwirken, um dies in die Formschlußstellung zu bringen.

Hinsichtlich der Anordnung von Wirksamkeit der Ausrichteinrichtung ist diese bei einigen Ausführungsbeispielen der erfindungsgemäßen Lösung unabhängig von der Vorpositioniereinrichtung.

Es besteht aber auch die Möglichkeit, die Ausrichteinrichtung so auszubilden, daß sie auch als Vorpositioniereinrichtung wirksam wird, so daß insbesondere die Möglichkeit besteht, mit denselben Elementen sowohl die Vorpositioniereinrichtung auszubilden, als auch die Ausrichteinrichtung.

Im Zusammenhang mit der bisherigen Erläuterung der einzelnen Ausführungsbeispiele wurden zur Ausbildung der Formschlußfixiereinrichtung keine näheren Angaben gemacht. So sieht eine besonders günstige Lösung vor, daß die Formschlußfixiereinrichtung mindestens ein an dem Lagerelement angeordnetes erstes und mindestens ein an der Lageraufnahme angeordnetes zweites Formschlußelement aufweist und daß das erste und das zweite Formschlußelement durch eine Relativbewegung derselben in Richtung der Schwenkachse miteinander in Eingriff bringbar sind.

Eine derartige Lösung ist insbesondere dann günstig, wenn das erste und zweite Formschlußelement derart ausgebildet sind, daß diese in der jeweiligen Formschlußstellung in formschlüssigen Eingriff bringbar sind.

Um beim Betrieb der Anhängekupplung eine Beschädigung der Formschlußelemente zu vermeiden ist vorzugsweise vorgesehen, daß das erste und das zweite Formschlußelement derart ausgebildet sind, daß diese in der jeweiligen Formschlußstellung in spielfreien Eingriff miteinander bringbar sind.

Ferner ist vorzugsweise vorgesehen, daß die Formschlußfixiereinrichtung so ausgebildet ist, daß das erste und das zweite Formschlußelement durch Bewegung des Lagerelements relativ zur Lageraufnahme miteinander in Eingriff bringbar sind.

Hinsichtlich der Ausbildung der Verschiebeeinrichtung wurden bislang keine näheren Angaben gemacht. Die Verschiebeeinrichtung kann in unterschiedlichster Weise ausgebildet sein.

Ein besonders günstiges Ausführungsbeispiel sieht vor, daß die Verschiebeeinrichtung eine Spindel und eine Spindelmutter aufweist.

Vorzugsweise ist dabei die Verschiebespindel drehfest mit dem Lagerelement verbunden und die Spindelmutter an der Lageraufnahme drehbar, jedoch in Richtung der Achse unverschiebbar gelagert.

Um eine Verschiebebewegung des Lagerelements zu erreichen, ist dabei vorzugsweise vorgesehen, daß der Antrieb selbstsperrend zusammenwirkende Getriebeelemente umfaßt, um dadurch sicherzustellen, daß sich die Spindelmutter in einer für diese vorgesehenen Drehstellung nicht löst, sondern in dieser stehen bleibt.

Hinsichtlich der Ausbildung des Antriebs ist es besonders günstig, wenn dieser einen Motor, insbesondere einen Elektromotor umfaßt.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: eine perspektivische Darstellung eines ersten Ausführungsbeispiels einer erfindungsgemäßen Anhängekupplung in einer Arbeitsstellung bei in einer Fixierstellung stehendem Lagerelement;
- Fig. 2: einen Schnitt längs Linie 2-2 in Fig. 1;
- Fig. 3: einen Schnitt ähnlich Fig. 2 bei einer Variante des ersten Ausführungsbeispiels mit einem konkret realisierten Antrieb zum Verschieben des Lagerelements;
- Fig. 4: einen Schnitt längs Linie 4-4 in Fig. 3;
- Fig. 5: eine perspektivische Darstellung ähnlich Fig. 1 des ersten Ausführungsbeispiels einer erfindungsgemäßen Anhängekupplung, bei welcher das Lagerelement in einer Schwenkstellung steht und eine Drehstellung aufweist, die sich entsprechend der Wirkung der Schwerkraft auf den Kugelhals einstellt;
- Fig. 6: eine Darstellung des Zustandes gemäß Fig. 5 mit Blick in Richtung eines Pfeils A in Fig. 5;
- Fig. 7: einen Schnitt längs Linie B-B in Fig. 6;
- Fig. 8: eine ausschnittsweise vergrößerte Darstellung eines Bereichs C in Fig. 7;
- Fig. 9: eine perspektivische Darstellung ähnlich Fig. 5 bei welcher das Lagerelement und der Kugelhals in einer einer ersten Endstellung entsprechenden Drehstellung stehen;
- Fig. 10: eine Darstellung ähnlich Fig. 6 des Zustandes gemäß Fig. 9;
- Fig. 11: einen Schnitt längs Linie B-B in Fig. 10;
- Fig. 12: eine Darstellung ähnlich Fig. 5 in welcher das Lagerelement aus der ersten Endstellung bereits in Richtung einer Fixierstellung verschoben wurde und bereits eine Ausrichteinrichtung wirksam ist;
- Fig. 13: eine Darstellung ähnlich Fig. 6 des Zustandes gemäß Fig. 12;
- Fig. 14: einen Schnitt längs Linie B-B in Fig. 13;
- Fig. 15: einen Schnitt längs Linie D-D in Fig. 14;
- Fig. 16: eine perspektivische Darstellung ähnlich Fig. 5 bei welchem das Lagerelement in einer einer Formschlußstellung entsprechenden Drehstellung steht;
- Fig. 17: eine Darstellung ähnlich Fig. 6 des Zustandes gemäß Fig. 16;
- Fig. 18: einen Schnitt längs Linie B-B in Fig. 17;
- Fig. 19: eine Darstellung ähnlich Fig. 6 des in der Fixierstellung stehenden Lagerelements mitsamt dem Kugelhals in der Arbeitsstellung entsprechend Fig. 1;
- Fig. 20: eine perspektivische Darstellung ähnlich Fig. 5 bei in Ruhestellung stehendem Kugelhals, wobei das Lagerelement in der Schwenkstellung steht und in einer zweiten Endstellung stabilisiert ist;
- Fig. 21: eine Darstellung ähnlich Fig. 6 des Zustandes gemäß Fig. 20;
- Fig. 22: einen Schnitt längs Linie B-B in Fig. 21 bei in Schwenkstellung stehendem Lagerelement, welches in der zweiten Endstellung stabilisiert ist;
- Fig. 23: eine perspektivische Ansicht ähnlich Fig. 5, bei welcher der Kugelhals und das Lagerelement in der der Ruhestellung zugeordneten zweiten Endstellung stehen;
- Fig. 24: eine Ansicht ähnlich Fig. 6 des Zustandes gemäß Fig. 23;
- Fig. 25: einen Schnitt Längs Linie B-B in Fig. 24;
- Fig. 26: einen Schnitt längs Linie D-D in Fig. 25 bei soeben unwirksam gewordener Vorpositioniereinrichtung;
- Fig. 27: eine perspektivische Darstellung ähnlich Fig. 5 bei in Formschlußstellung stehendem Lagerelement vor dem endgültigen Ineingriffkommen der Formschlußelemente;
- Fig. 28: eine Darstellung ähnlich Fig. 6 des Zustandes in Fig. 27;
- Fig. 29: einen Schnitt längs Linie B-B in Fig. 28;
- Fig. 30: eine perspektivische Darstellung ähnlich Fig. 5 eines in Ruhestellung stehenden Kugelhalses mit in Fixierstellung stehendem Lagerelement;
- Fig. 31: eine Ansicht ähnlich Fig. 6 des Zustandes gemäß Fig. 30;
- Fig. 32: einen Schnitt längs Linie B-B in Fig. 31;
- Fig. 33: einen Schnitt längs Linie D-D in Fig. 32.
- Fig. 34: eine Darstellung ähnlich Fig. 11 eines zweiten Ausführungsbeispiels einer erfindungsgemäßen Anhängekupplung;
- Fig. 35: einen Schnitt längs Linie E-E in Fig. 34;
- Fig. 36: eine Darstellung ähnlich Fig. 12 des zweiten Ausführungsbeispiels der erfindungsgemäßen Anhängekupplung;
- Fig. 37: eine Darstellung ähnlich Fig. 35 des Zustands gemäß Fig. 36;
- Fig. 38: eine Darstellung ähnlich Fig. 16 des zweiten Ausführungsbeispiels;
- Fig. 39: eine Darstellung ähnlich Fig. 27 beim zweiten Ausführungsbeispiels der erfindungsgemäßen Anhängekupplung;
- Fig. 40: einen Schnitt längs Linie F-F in Fig. 39 bei in Ruhestellung stehendem Kugelhals mit in Fixierstellung stehendem Lagerelement;
- Fig. 41: eine Darstellung ähnlich Fig. 7 eines dritten Ausführungsbeispiels einer erfindungsgemäßen Anhängevorrichtung in der ersten Endstellung;
- Fig. 42: eine Abwicklung einer Draufsicht auf einen Rastelemente aufweisenden Körper in Richtung RB in Fig. 41;

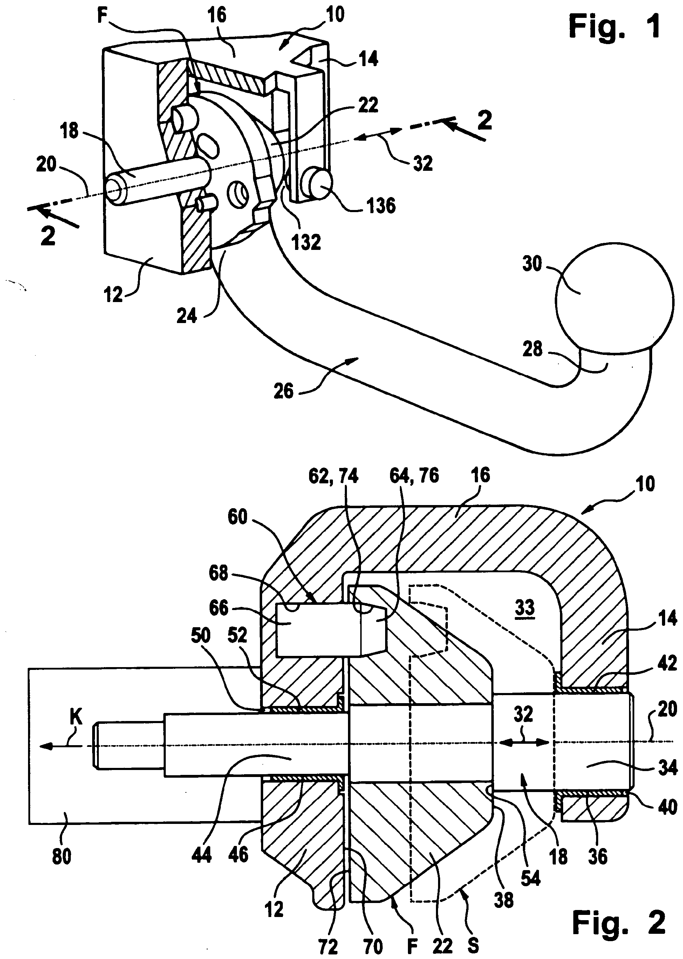

Ein erstes Ausführungsbeispiel einer erfindungsgemäßen Anhängekupplung, dargestellt in Fig. 1, umfaßt eine als Ganzes mit 10 bezeichnete fahrzeugfeste Lageraufnahme mit einer ersten Lagerwange 12 und einer zweiten Lagerwange 14, die im Abstand voneinander angeordnet und über ein Basisteil 16 miteinander verbunden sind.

An den Lagerwangen 12 und 14 ist eine als Ganzes mit 18 bezeichnete Lagerwelle um eine Achse 20 drehbar gelagert, wobei die Lagerwelle 18 die Lagerwangen 12 und 14 durchsetzt.

Außerdem durchsetzt die Lagerwelle 18 ein Lagerelement 22, welches an einem Ende 24 eines als Ganzes mit 26 bezeichneten Kugelhalses gehalten ist, der an einem dem Ende 24 gegenüberliegenden abgekröpften Ende 28 eine Kupplungskugel 30 aufweist.

Die Lagerwelle 18 ist jedoch nicht nur schwenkbar an den Lagerwangen 12 und 14 gehalten, sondern auch in einer parallel zur Achse 20 verlaufenden Achsrichtung 32 verschiebbar, so daß auch das Lagerelement 22 in der Achsrichtung 32 mit der Lagerwelle 18 verschiebbar ist.

Wie in Fig. 2 dargestellt, ist die Verschiebbarkeit des Lagerelements 22 dadurch begrenzt, daß dieses in einem Raum 33 zwischen der ersten Lagerwange 12 und der zweiten Lagerwange 14 liegt. Ferner weist die Lagerwelle 18 zur Lagerung derselben in der zweiten Lagerwange 14 einen Abschnitt 34 mit einer zur Achse 20 zylindrischen Mantelfläche 36 auf, welche sich in der Achsrichtung 32 derart weit erstreckt, daß die Lagerwelle 18 mit dem auf dieser sitzenden Lagerelement 22 in dem Raum 33 zwischen den Lagerwangen 12, 14 unter Aufrechterhaltung der Lagerung desselben an der zweiten Lagerwange 14 verschiebbar ist, insbesondere von einer an der ersten Lagerwange 12 im wesentlichen anliegenden Stellung so weit verschiebbar ist, bis das Lagerelement 22 mit einer der zweiten Lagerwange 14 zugewandten Rückseite 38 an der zweiten Lagerwelle 14 zur Anlage kommt.

Vorzugsweise ist zur geeigneten Lagerung der zylindrischen Mantelfläche 36 eine eine Lageröffnung 40 in der zweiten Lagerwange 14 durchsetzende Lagerbüchse 42 vorgesehen, in welcher die zylindrische Mantelfläche 36 um die Achse 20 drehbar und in Achsrichtung 32 verschiebbar geführt ist.

Ferner weist die Lagerwelle 18 einen Abschnitt 44 mit einer zylindrischen Mantelfläche 46 auf, mit welchem die Lagerwelle 18 in einer eine Lageröffnung 50 in der ersten Lagerwange 12 durchsetzenden Lagerbüchse 52 um die Achse 20 drehbar und in Achsrichtung 32 verschiebbar geführt ist.

Im einfachsten Fall ist die Lagerwelle 18 bezüglich der Achse 20 drehfest und in Achsrichtung 32 ebenfalls unverschiebbar mit dem Lagerelement 22 verbunden, wobei vorzugsweise die Lagerwelle 18 mit einem Bund 54 an der Rückseite 38 anliegt, so daß eine definierte Relativposition der Lagerwelle 18 zum Lagerelement 22 vorgegeben ist.

Zur drehfesten Fixierung des Lagerelements 22 an der Lageraufnahme 10 ist eine als Ganzes mit 60 bezeichnete Formschlußfixiereinrichtung vorgesehen, welche mindestens ein erstes, an dem Lagerelement 22 vorgesehenes Formschlußelement 62, vorzugsweise ausgebildet als Vertiefung, und ein zweites, an der ersten Lagerwange 12 vorgesehenes Formschlußelement 64, beispielsweise in Form eines Vorsprungs, umfaßt, wobei der Vorsprung 64 mit dem ersten Formschlußelement 62 in Eingriff bringbar ist, beispielsweise dadurch, daß der Vorsprung 64 in die Aufnahme 62 eingreift.

Das zweite Formschlußelement 64 ist beispielsweise durch einen Zapfen 66 gebildet, der in eine entsprechende Bohrung 68 in der ersten Lagerwange 12 eingesetzt ist und über eine dem Lagerelement 22 zugewandte Innenseite 70 der ersten Lagerwange 12 übersteht. Ferner ist das erste Formschlußelement 62 vorzugsweise als sich von einer der Rückseite 38 gegenüberliegenden Vorderseite 72 ausgehend in das Lagerelement 22 hinein erstreckende Vertiefung ausgebildet, wobei bei wirksamer Formschlußfixiereinrichtung 60 vorzugsweise die Vorderseite 72 des Lagerelements 22 nahe der Innenseite 70 der ersten Lagerwange 12 steht.

Die Formschlußfixiereinrichtung 60 ist so ausgebildet, daß die Formschlußelemente 62 und 64 spielfrei ineinander eingreifen, insbesondere dann, wenn das Lagerelement 22 mit einer Kraft K beaufschlagt ist, welche die Formschlußelemente 62 und 64 in Eingriff drückt und dabei beispielsweise einen konischen Bereich 76 des zweiten Formschlußelements 64 in einen konischen Bereich 74 des ersten Formschlußelements 62 hineindrückt.

Diese in Fig. 2 dargestellte Stellung ist im Rahmen der vorliegenden Erfindung als Fixierstellung F bezeichnet und die Kraft K wird vorzugsweise durch eine in Fig. 2 schematisch dargestellte, und als Ganzes mit 80 bezeichnete Verschiebeeinrichtung bewirkt, welche auf die Lagerwelle 18 einwirkt, um somit das auf dieser sitzende Lagerelement 22 zu verschieben.

Mit der Verschiebeeinrichtung 80 ist das Lagerelement 22 auch in eine in Fig. 2 gestrichelt dargestellte Schwenkstellung S verschiebbar, in welcher dessen Rückseite 38 nahe der zweiten Lagerwange 14 steht und die Formschlußelemente 62 und 64 außer Eingriff sind, so daß das Lagerelement 22 und mit diesem auch der gesamte Kugelhals 26 ungehindert durch die Formschlußelemente 62 und 64 und somit frei um die Schwenkachse 20 verschwenkbar sind.

Damit läßt sich der Kugelhals 26 von einer in Fig. 1 dargestellten Arbeitsstellung A in eine Ruhestellung R verschwenken, in welcher der Kugelhals 26 zwischen einem hinteren Stoßfänger und einer Rückseite einer Karosserie eines Kraftfahrzeugs liegt, wie in der EP 0 799 732 A1 beschrieben.

Die Verschiebeeinrichtung 80 kann in unterschiedlichster Art und Weise ausgebildet sein. Eine Möglichkeit besteht darin, die Verschiebeeinrichtung entsprechend der europäischen Patentanmeldung 1 142 732 A1 auszubilden. Eine andere Ausführungsform sieht vor, die Verschiebeeinrichtung 80 entsprechend der europäischen Patentanmeldung 1 288 026 A1 auszubilden.

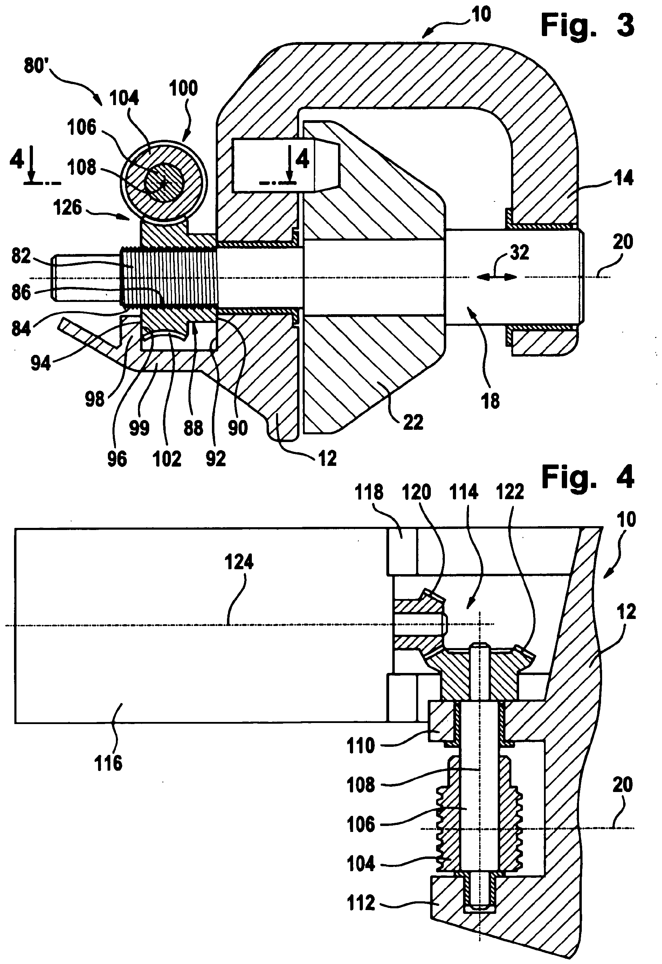

Eine weitere Ausführungsform einer erfindungsgemäßen Verschiebeeinrichtung 80', dargestellt in Fig. 3, umfaßt einen sich auf einer dem Lagerelement 22 gegenüberliegenden Seite der ersten Lagerwange 12 angeordneten und sich über diese hinaus erstreckenden Abschnitt der Lagerwelle 18, welcher zur Bildung einer Spindel 82 mit einem Außengewinde 84 versehen ist, das seinerseits in ein Innengewinde 86 einer Spindelmutter 88 eingreift, und die Spindelmutter 88 durchsetzt.

Die Spindelmutter 88 weist eine der ersten Lagerwange 12 zugewandte Stirnseite 90 auf, die an einer dem Lagerelement 22 abgewandten Seite der ersten Lagerwange 12 liegenden Außenfläche 92 der ersten Lagerwange 12 anliegt. Ferner weist die Spindelmutter 88 auf ihrer der Stirnseite 90 gegenüberliegenden Seite eine Stirnseite 94 auf, welche an einer Wandfläche 96 eines Vorsprungs 98 anliegt, der seinerseits an einem mit der ersten Lagerwange 12 verbundenen Trägerbereich 99 der Lageraufnahme 10 angeordnet ist, so daß die Spindelmutter 88 zwischen der Außenfläche 92 der ersten Lagerwange 12 und der Wandfläche 96 des Vorsprungs 98 in der Achsrichtung 32 unverschieblich geführt ist, wobei eine drehbare Lagerung der Spindelmutter 88 relativ zur Achse 20 durch die Lagerwelle 18 selbst erfolgt, so daß somit insgesamt die Spindelmutter 88 durch die Lagerwelle 18 schwimmend gelagert ist und gegenüber der Lageraufnahme 10 in der Achsrichtung 32 unverschieblich festgelegt ist.

Durch Drehen der Spindelmutter 88 besteht aufgrund der Festlegung der Spindelmutter 88 in Achsrichtung 32 relativ zur Lageraufnahme 10 die Möglichkeit, die Lagerwelle 18 in der Achsrichtung 32 relativ zur Lageraufnahme 10 zu verschieben, und zwar genau so, daß das Lagerelement 22 zwischen der in Fig. 2 durchgehend gezeichnet dargestellten Fixierstellung F und der in Fig. 2 gestrichelt dargestellten Schwenkstellung S durch beliebige Zwischenstellungen hindurch hin und her bewegbar ist.

Zum Drehen der Spindelmutter 88 ist diese mit einem Antrieb 100 antreibbar, welcher eine auf der Spindelmutter 88 angeordnete Antriebsverzahnung 102 aufweist, die beispielsweise als mit einer Antriebsschnecke 104 in Eingriff bringbare Schneckenverzahnung ausgebildet ist.

Die Antriebsschnecke 104 sitzt ihrerseits auf einer Antriebswelle 106 des Antriebs 100, die um eine Wellenachse 108 an der Lageraufnahme 10 drehbar gehalten ist, beispielsweise so, daß die Antriebsschnecke 104 zwischen zwei Lagerflanschen 110 und 112 der Lageraufnahme 10 sitzt, in welchen dann die Antriebswelle 106 drehbar gelagert ist. Ferner erstreckt sich die Antriebswelle 106 vorzugsweise durch einen der Lagerflansche, nämlich den Lagerflansch 110, hindurch und ist über ein Getriebe 114 mit einem Antriebsmotor 116 des Antriebs 100 gekoppelt. Der Antriebsmotor 116 ist vorzugsweise ein Elektromotor, der seinerseits mittels einer Motoraufnahme 118 fest mit der Lageraufnahme 10 verbunden ist.

Das Getriebe 114 des Antriebs 100 ist in dem dargestellten Ausführungsbeispiel ein Kegelradgetriebe, umfassend zwei Kegelräder 120 und 122, es ist aber auch denkbar, das Getriebe 114 als andersgeartetes Umlenkgetriebe, beispielsweise als Schneckengetriebe oder jede andere Art von Umlenkgetriebe auszubilden.

Für einen raumsparenden Aufbau ist es vorteilhaft, wenn das Getriebe 114 so ausgebildet ist, daß sich eine Motorachse 124 quer zur Wellenachse 108 erstrecken kann.

Der Vorteil der Verwendung der Antriebsschnecke 104 in Verbindung mit der Antriebsverzahnung 102 auf der Spindelmutter 88 ist darin zu sehen, daß ein derartiges im Antrieb 100 vorgesehenes Schneckengetriebe 126 selbsthemmend ist und somit bei stillstehendem Antriebsmotor 116 jede Drehbewegung der Spindelmutter 88 blockiert ist.

Es ist aber auch denkbar, das Außengewinde 84 der Lagerwelle 18 und das Innengewinde 86 der Spindelmutter 88 so auszubilden, daß diese selbsthemmend sind, so daß sich beispielsweise die Möglichkeit eröffnet, die Spindelmutter 88 durch ein nicht selbsthemmendes Getriebe anzutreiben.

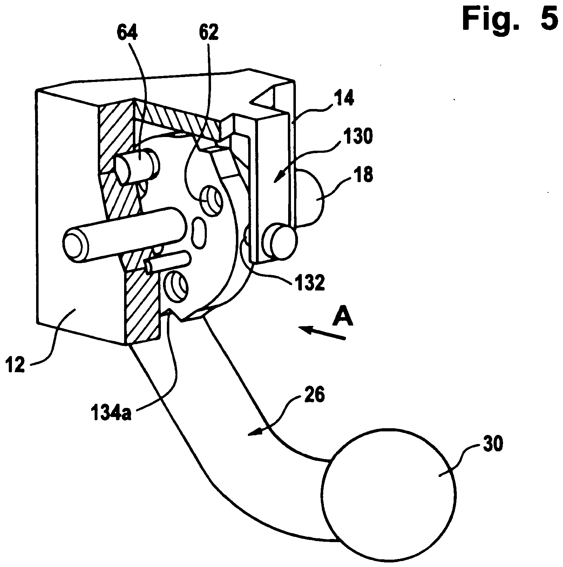

Die Erfindung geht aus von einer Anhängekupplung der beschriebenen Art, bei welcher sich in der Schwenkstellung S, gestrichelt dargestellt in Fig. 2 sowie dargestellt in Fig. 5 der Kugelhals 26 mit dem Lagerelement 22 aufgrund der Einwirkung der Schwerkraft auf diesen derart dreht, daß der Kugelhals 26 in der Schwenkstellung S nach unten hängt und die Kupplungskugel 30 nahe einer Fahrbahnoberfläche gehalten wird, so daß der Kugelhals 26 die in Fig. 1 dargestellte Arbeitsstellung verlassen hat.

Im einfachsten Fall ist der Kugelhals 26 mit dem Lagerelement 22 in der Schwenkstellung S des Lagerelements 22 mitsamt der Lagerwelle 18 frei drehbar. Es wäre aber auch denkbar, einen Antrieb vorzusehen, der allerdings bei Einwirkung der Schwerkraft auf den Kugelhals 26 durch diesen mitdrehbar ist.

In der Schwenkstellung S ist dabei - wie bereits beschrieben - das Lagerelement 22 soweit in Achsrichtung 32 zur zweiten Lagerwange 14 hin verschoben, daß die Formschlußfixiereinrichtung 60 unwirksam ist, insbesondere die Formschlußelemente 64 nicht in die korrespondierenden Formschlußelemente 62 eingreifen.

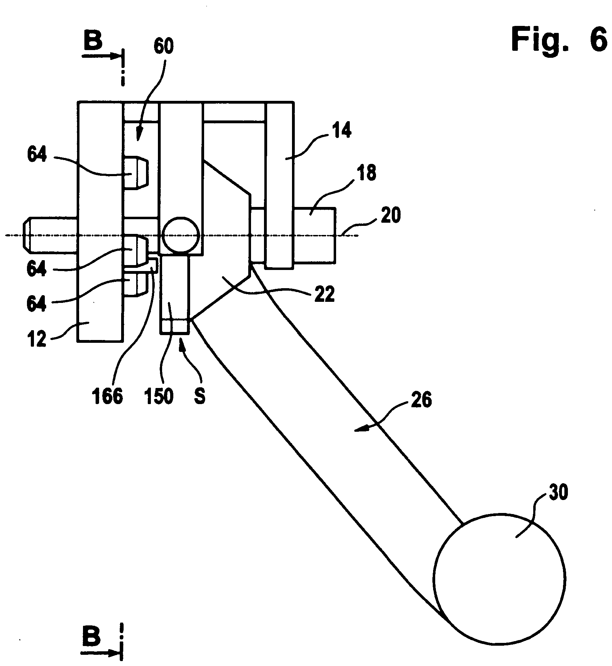

Dadurch lassen sich die Formschlußelemente 62 gegenüber den Formschlußelementen 64 verdrehen, so daß die Formschlußelemente 62 und 64 - wie in Fig. 6 dargestellt - bei nach unten in Richtung der Fahrbahnoberfläche hängendem Kugelhals 26 nicht mehr deckungsgleich zueinander ausgerichtet sind.

Um den Kugelhals 26 in die in Fig. 1 dargestellte Fixierstellung F der Arbeitsstellung A bringen zu können, ist die Anhängekupplung mit einer Vorpositioniereinrichtung 130 versehen, welche ein erstes Rastelement 132 umfaßt, welches fest an der Lageraufnahme 10 angeordnet ist und ein zweites Rastelement 134a, welches ebenfalls fest an dem Lagerelement 22 angeordnet ist.

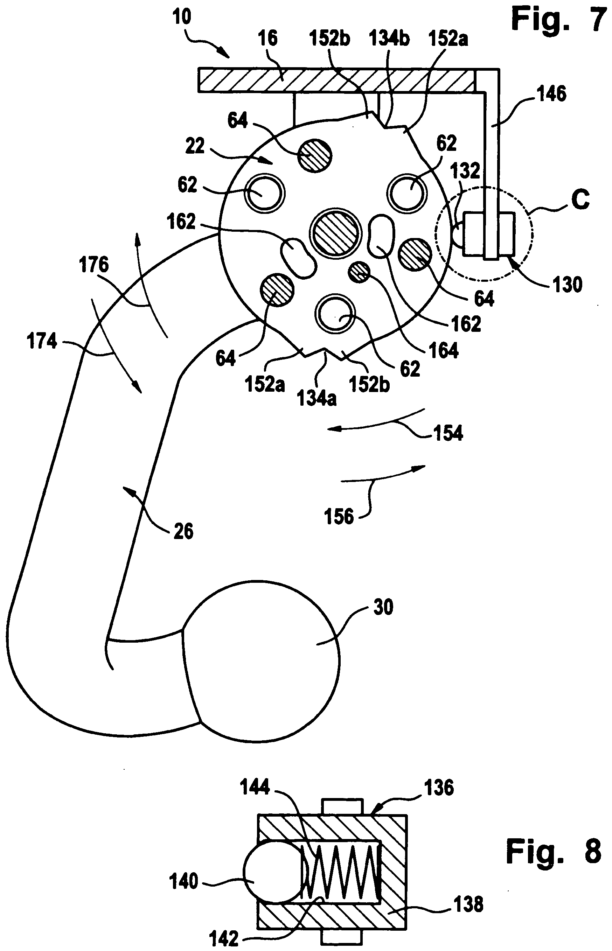

Das erste Rastelement 132 ist, wie in Fig. 8 dargestellt, beispielsweise als Kugeldruckschraube 136 ausgebildet, welche einen Schraubenkörper 138 umfaßt, in welchem eine Rastkugel 140 in einer Aufnahmebohrung 142 geführt ist und durch eine Druckfeder 144, die ebenfalls in der Aufnahmebohrung 142 angeordnet ist, in Richtung einer über die Aufnahmebohrung 142 überstehenden Raststellung beaufschlagt ist, wobei die Rastkugel 140 die Möglichkeit hat, sich ausgehend von der Raststellung gegen die Wirkung der Druckfeder 144 in die Aufnahmebohrung 142 hineinzubewegen.

Eine derartige Kugeldruckschraube 136 ist beispielsweise mit einem Arm 146 an der Lageraufnahme 10, vorzugsweise an dem Basisteil 16 derselben, gehalten.

Das zweite Rastelement 134a ist, wie in Fig. 5 und 7 dargestellt, eine in einem den maximalen radialen Abstand von der Achse 20 aufweisenden Umfangsbereich 150 des Lagerelements 22 angeordnete V-förmige Rastausnehmung 134a, die durch beiderseits der Rastausnehmung 134a angeordnete Rasthöcker 152a und 152b gebildet ist, wobei die Rasthöcker 152a, b noch radial zur Achse 20 über den Umfangsbereich 150 überstehen.

Außerdem ist an dem Lagerelement 22 noch ein weiteres zweites Rastelement 134b vorgesehen, welches in gleicher Weise wie das Rastelement 134a ausgebildet ist und ebenfalls zwischen zwei Rasthöckern 152a, 152b liegt.

Die Funktion und Anordnung des weiteren zweiten Rastelements 134b wird nachfolgend noch im einzelnen erläutert.

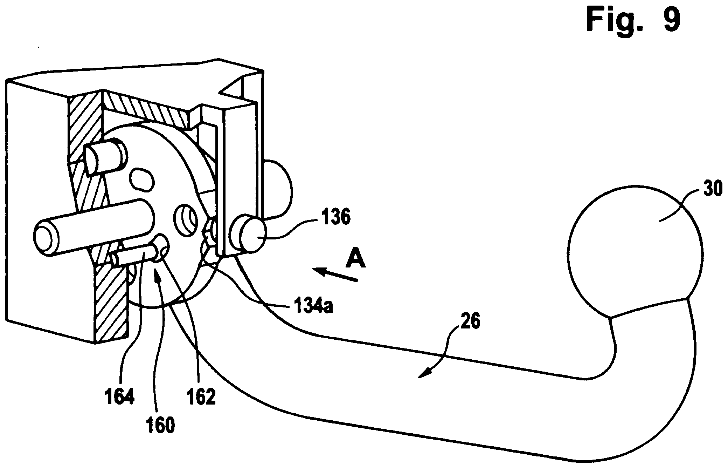

Das erste Rastelement 134a ist erfindungsgemäß an dem Lagerelement 22 derart angeordnet, daß beim Verschwenken in einer zu einer schwerkraftbedingten Schwenkrichtung 154 entgegengesetzten Schwenkrichtung 156 die Rastelemente 132 und 134a in einer in Fig. 9 bis 11 dargestellten ersten Endstellung Ea in Wirkverbindung miteinander kommen, wobei in dieser ersten Endstellung Ea die Rastkugel 140 in die V-förmige Rastausnehmung 134a eingreift, wodurch der Kugelhals 26 in der ersten Endstellung Ea festlegbar ist, obwohl das Lagerelement 22 in der Schwenkstellung steht und somit durch die Formschlußfixiereinrichtung 60 nicht festgelegt ist.

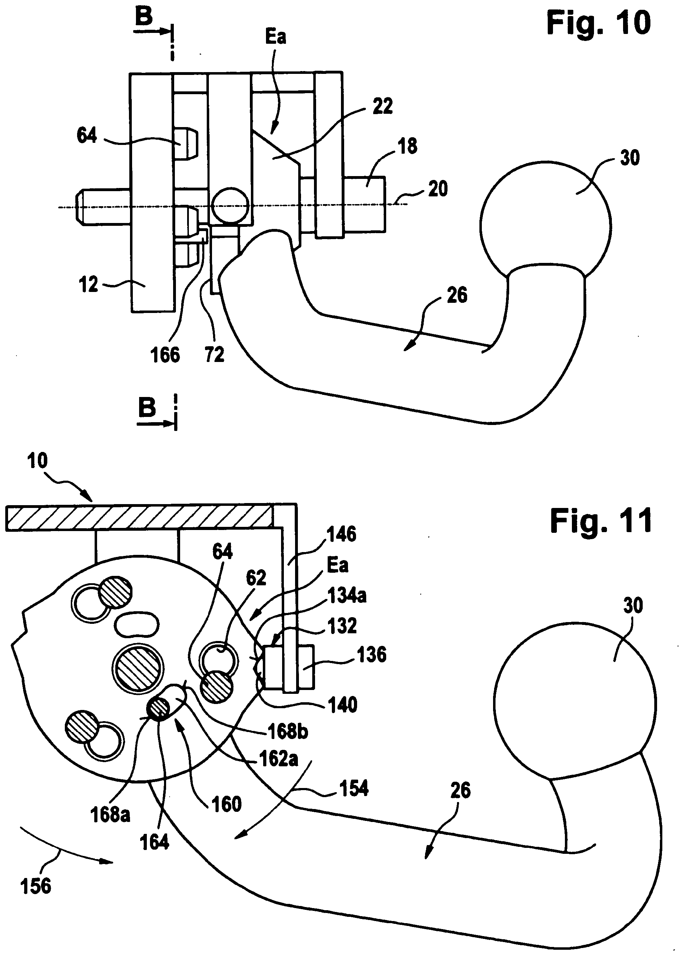

Die erste Endstellung Ea, die durch die zusammenwirkenden Rastelemente 132 und 134a definiert ist, ist dabei beispielsweise wie in Fig. 11 dargestellt, so angeordnet, daß die Formschlußelemente 62 in der Schwenkrichtung 156 über eine mit den zweiten Formschlußelementen 64 deckungsgleiche Drehstellung das heißt eine erste Formschlußstellung FSa, hinausbewegt sind, so daß beispielsweise in dieser ersten Endstellung die Formschlußelemente 62, 64 um einen geringen Winkelabstand gegeneinander verdreht sind, jedoch im wesentlichen unmittelbar nebeneinander liegen.

Um die Formschlußelemente 62, 64 in eine miteinander fluchtende Stellung zu bringen, ist eine in Fig. 9 bis 11 dargestellte Ausrichteinrichtung 160 vorgesehen, welche zwei Ausrichtelemente 162 und 164 aufweist, wobei das Ausrichtelement 162 beispielsweise eine in dem Lagerelement 62 vorgesehene und auch bereits in Fig. 7 dargestellte Vertiefung ist, während das Ausrichtelement 164 beispielsweise ein sich von der ersten Lagerwange 12 ausgehend erstreckender Zapfen ist, der sich ungefähr parallel zur Achsrichtung 32 in Richtung des Lagerelements 22 erstreckt und zwar derart, daß dieser mit einem Endbereich 166 über die Formschlußelemente 64 hinausreicht, wie in Fig. 10 und auch bereits in Fig. 6 dargestellt.

Die Rastelemente 132 und 134a sind nun so ausgebildet, daß das Lagerelement 22 in der Endstellung gehalten werden kann und in dieser Endstellung 22 durch die Verschiebeeinrichtung 80 in Richtung der ersten Lagerwange 12 bewegt werden kann, ohne zunächst die erste Endstellung Ea zu verlassen.

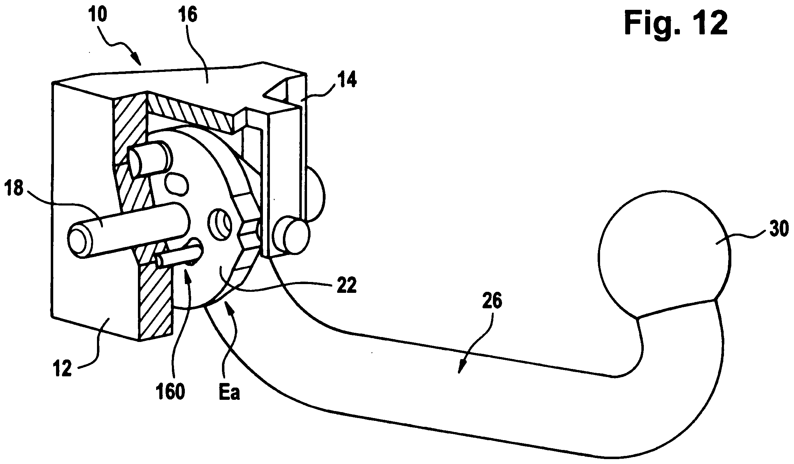

Ferner sind die Ausrichtelemente 162 und 164 relativ zueinander so angeordnet, daß das Ausrichtelement 164 in der ersten Endstellung Ea mit dem Endbereich 166 in Eingriff mit dem Ausrichtelement 162 kommen kann, bevor die Formschlußelemente 64 die Vorderseite 72 des Lagerelements 22 berühren. Ferner sind die Rastelemente 132 und 134 so ausgebildet, daß diese dann, wenn die Ausrichteinrichtung 160 voll wirksam ist, ihre Wirkung verlieren, wie in den Fig. 12 bis 15 dargestellt.

Unmittelbar nachdem die Vorpositioniereinrichtung 130 mit dem Rastelement 132 und dem Rastelement 134a ihre Wirkung verloren hat, stehen das Lagerelement 22 und der Kugelhals 26 voll unter der Wirkung der Schwerkraft und haben die Tendenz, sich in Richtung der schwerkraftbedingten Schwenkrichtung 154 zu bewegen, wobei diese Bewegung nur in dem Maße möglich ist, welches das Ausrichtelement 162 zuläßt.

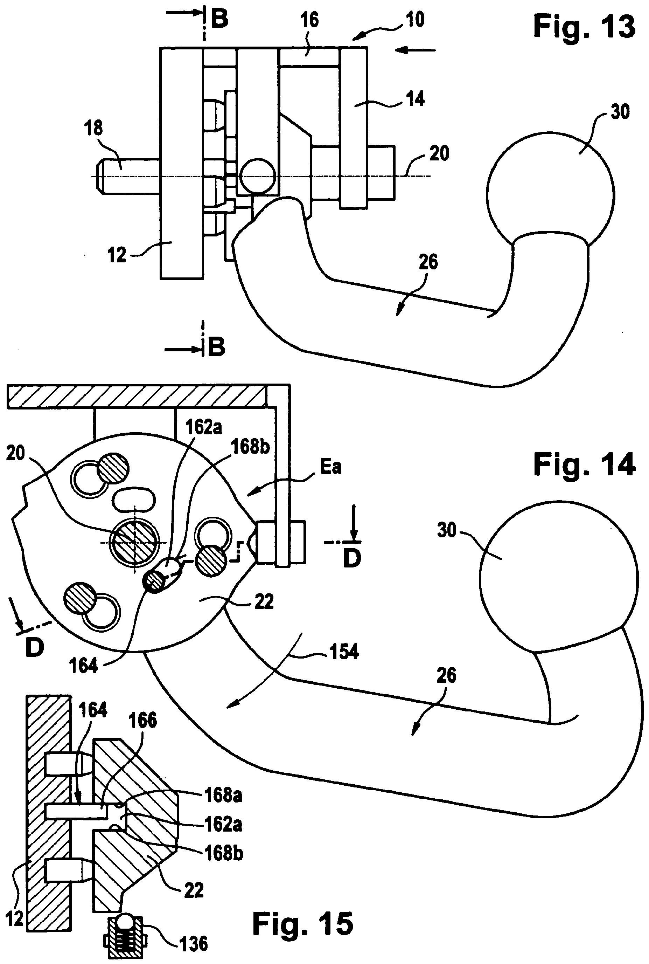

Beispielsweise ist das Ausrichtelement 162 so ausgebildet, daß es in einem Winkelabstand voneinander angeordnete Endwände 168a, 168b aufweist, die eine Drehbewegung des Lagerelements 22 um die Achse 20 begrenzen. Steht beispielsweise, wie in Fig. 14 dargestellt, das Ausrichtelement 164 in der Endstellung derart, daß es nahe der Endwand 168a in das als Ausnehmung ausgebildete Ausrichtelement 162a eintaucht, während die Endwand 168b in einem Winkelabstand bezogen auf die Achse 20 von dem Ausrichtelement 168 angeordnet ist, so besteht, wie in Fig. 14 dargestellt, nach Beendigung der Wirksamkeit der Vorpositioniereinrichtung 130 die Möglichkeit einer Schwenkbewegung des Kugelhalses 26 mit dem Lagerelement 22 in Richtung der schwerkraftbedingten Schwenkrichtung 154 so weit, bis der Endbereich 166 des Ausrichtelements 164 an der Endwand 168b anliegt.

Wie bereits dargelegt, ist die erste Endstellung Ea des Kugelhalses 26 mit dem Lagerelement 22 derart gewählt, daß in dieser die Formschlußelemente 62 und 64 nicht in Eingriff kommen, jedoch dicht beieinander, das heißt in einem kleinen Winkelabstand voneinander angeordnet sind.

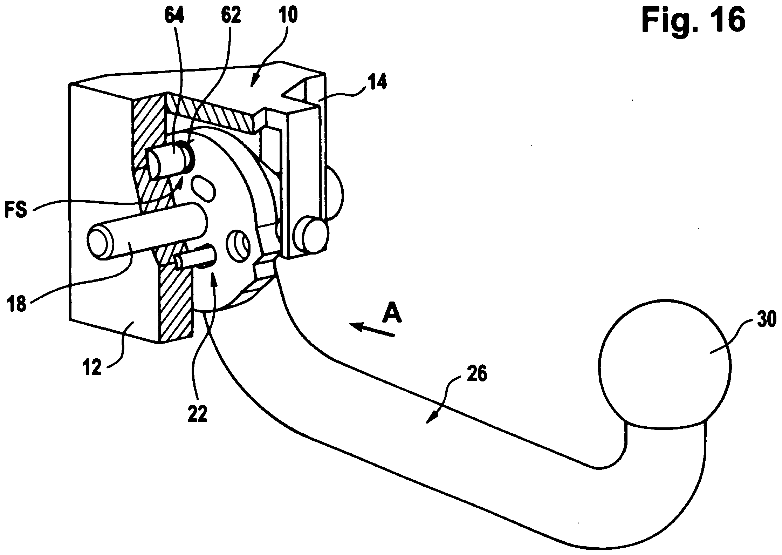

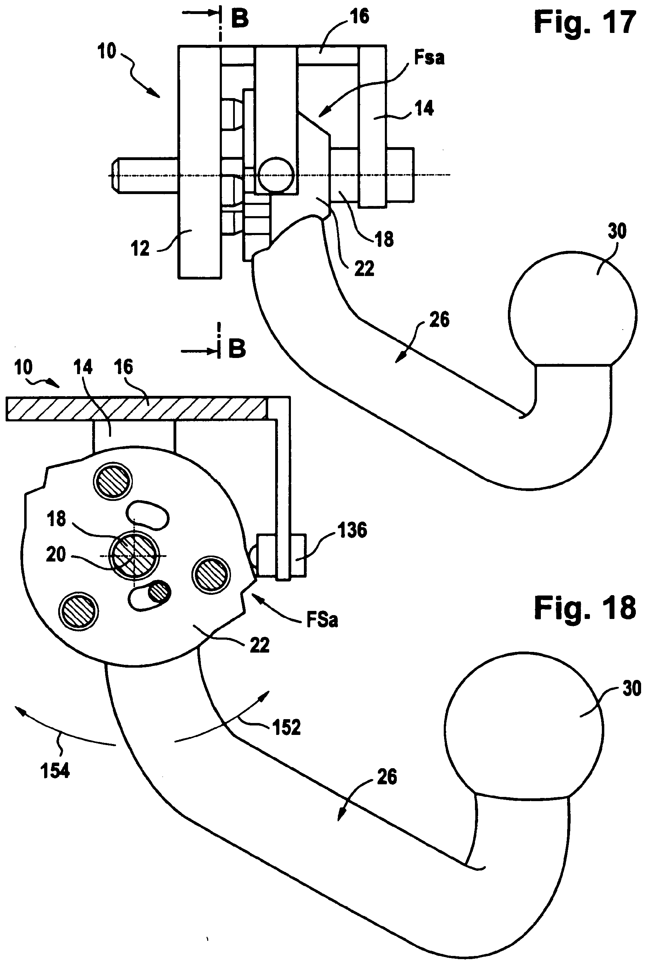

Dagegen definiert die Ausrichteinrichtung 160 dann, wenn das Ausrichtelement 164 mit dem Endbereich 166 an der Endwand 168b anliegt, wie in den Fig. 16 bis 18 dargestellt, eine Drehstellung des Lagerelements 22 und des Kugelhalses 26, in welcher die Formschlußelemente 62 und 64 miteinander fluchten, allerdings ohne daß diese zunächst miteinander in Eingriff stehen. Diese Drehstellung des Lagerelements 22 wird als durch die Ausrichteinrichtung 160 festgelegte erste Formschlußstellung FSa bezeichnet. Diese in den Fig. 16 bis 18 dargestellte erste Formschlußstellung FSa, bleibt so lange erhalten, so lange die Ausrichtelemente 162a und 164 in Eingriff stehen, wobei insbesondere das Ausrichtelement 164 mit seinem Endbereich 166 an der Endwand 168b des Ausrichtelements 162 anliegt.

In dieser ersten Formschlußstellung FSa besteht nun die Möglichkeit, durch eine einfache lineare Verschiebebewegung des Lagerelements 22 in Richtung der ersten Lagerwange 12, beispielsweise durchgeführt mittels der Linearverschiebeeinrichtung 80, die Formschlußelemente 62 und 64 miteinander in Eingriff zu bringen und somit in die bereits im Zusammenhang mit Fig. 1 beschriebene Fixierstellung F zu bringen, in welcher das Lagerelement 22 und somit auch der Kugelhals 26 drehfest gegenüber der Lageraufnahme 10 fixiert sind.

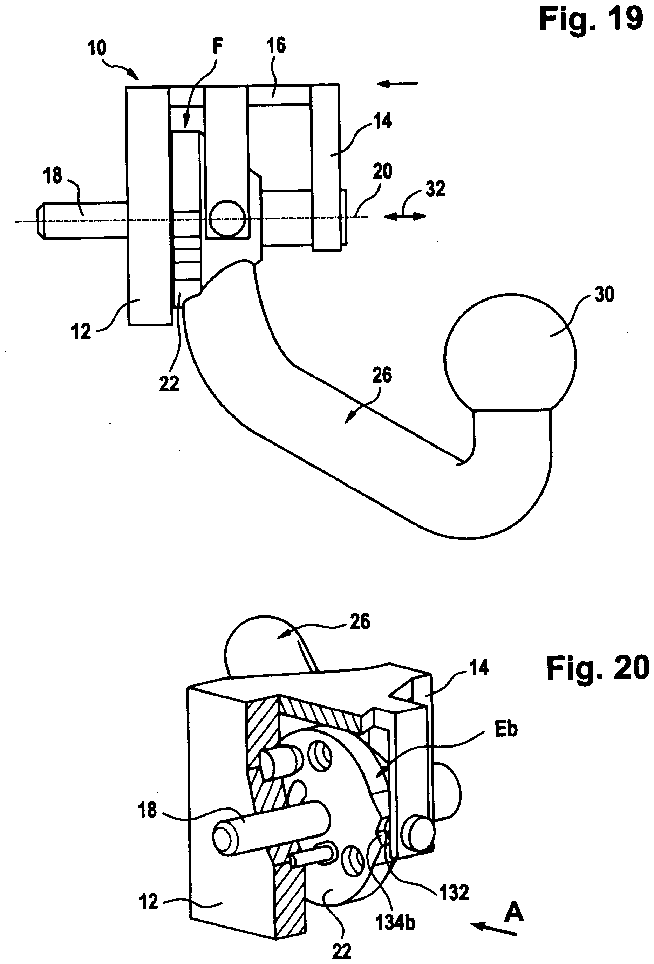

Diese Fixierstellung F ist nochmals in Fig. 19 verdeutlicht, wobei Fig. 19 zeigt, daß das Lagerelement 22 um den maximal möglichen Weg in Achsrichtung 32 in Richtung der ersten Lagerwange 12 verschoben ist, um die bereits im Zusammenhang mit Fig. 1 und 2 erläuterte spielfreie Fixierung des Lagerelements 22 relativ zur Lageraufnahme 10 zu erreichen.

Mit der Verschiebeeinrichtung 80 besteht jedoch nicht nur die Möglichkeit, das Lagerelement 22 mit dem Kugelhals 26 in die in Fig. 1, 2 und 19 dargestellte Fixierstellung F zu bewegen, sondern auch die Möglichkeit, diese aus der Fixierstellung F heraus in Richtung der in Fig. 2 gestrichelt dargestellten Schwenkstellung S zu bewegen. In diesem Fall wird zunächst durch die Ausrichteinrichtung 160 die erste Formschlußstellung FSa aufrecht erhalten und das Lagerelement 22 mit dem Kugelhals 26 ist erst dann in einer ersten Freigabestellung FGa und von dieser ausgehend frei um die Achse 20 verschwenkbar, wenn die Ausrichteinrichtung 160 mit den Ausrichtelementen 162a und 164 ihre Wirkung verloren hat, das heißt, das Ausrichtelement 164 außer Eingriff mit dem Ausrichtelement 162a gekommen ist. In diesem Fall ist das Lagerelement 22 mit dem Kugelhals 24 wiederum in Richtung der schwerkraftbedingten Schwenkrichtung 154 verschwenkbar, so daß es unter der Wirkung der Schwerkraft in die in Fig. 5 bis 7 dargestellte Drehstellung übergeht.

Ausgehend von der in Fig. 5 bis 7 dargestellten Drehstellung S besteht außerdem die Möglichkeit, den Kugelhals 26 in einer einer schwerkraftbedingten Schwenkrichtung 174 entgegengesetzten Schwenkrichtung 176 in Richtung der Ruhestellung R bis zu einer zweiten Endstellung Eb, dargestellt in den Fig. 20 bis 22, zu verschwenken, in welcher das Rastelement 132 mit dem weiteren zweiten Rastelement 134b in Eingriff kommt, so daß in ähnlicher Weise - wie bereits im Zusammenhang mit der ersten Endstellung beschrieben - ein Verschwenken des Lagerelements 22 in der schwerkraftbedingten Schwenkrichtung 174 verhindert wird.

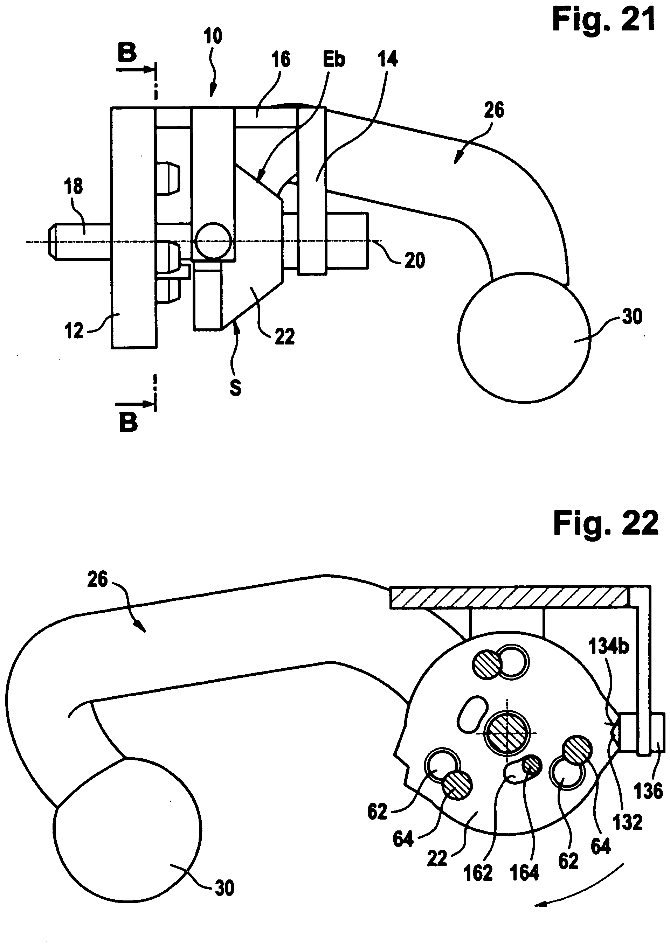

In dieser weiteren zweiten Endstellung Eb steht, wie insbesondere in Fig. 20 und 21 dargestellt, das Lagerelement 22 nach wie vor in seiner Schwenkstellung S, in welcher weder die Formschlußfixiereinrichtung 60 noch die Ausrichteinrichtung 160 wirksam ist, sondern es ist lediglich die Vorpositioniereinrichtung 130 mit den Rastelementen 132 und 134b wirksam.

Außerdem sind - wie bereits im Zusammenhang mit der ersten Endstellung Ea zum Erreichen der Arbeitsstellung erläutert - die Formschlußelemente 62 und 64 so angeordnet, daß diese nicht in der zweiten Formschlußstellung FSb stehen und somit nicht miteinander fluchten, sondern in geringem Winkelabstand voneinander stehen.

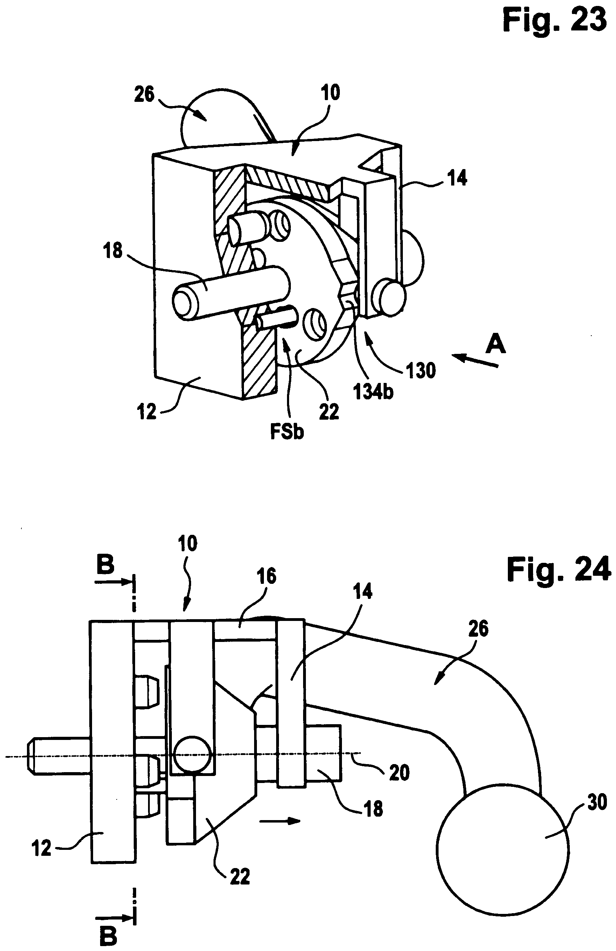

Dagegen sind die Ausrichtelemente 162b und 164 so zueinander ausgerichtet, daß diese insoweit miteinander fluchten, als das Ausrichtelement 164 mit dem Ausrichtelement 162a in Eingriff bringbar ist. Durch Verschieben des Lagerelements 22 in Richtung der ersten Lagerwange 12 besteht in gleicher Weise wie im Zusammenhang mit dem Erreichen der Arbeitsstellung A beschrieben, die Möglichkeit, die Ausrichteinrichtung 160 in ihre wirksame Stellung zu bringen, wie im Zusammenhang mit den Fig. 23, 24 und 25 dargestellt.

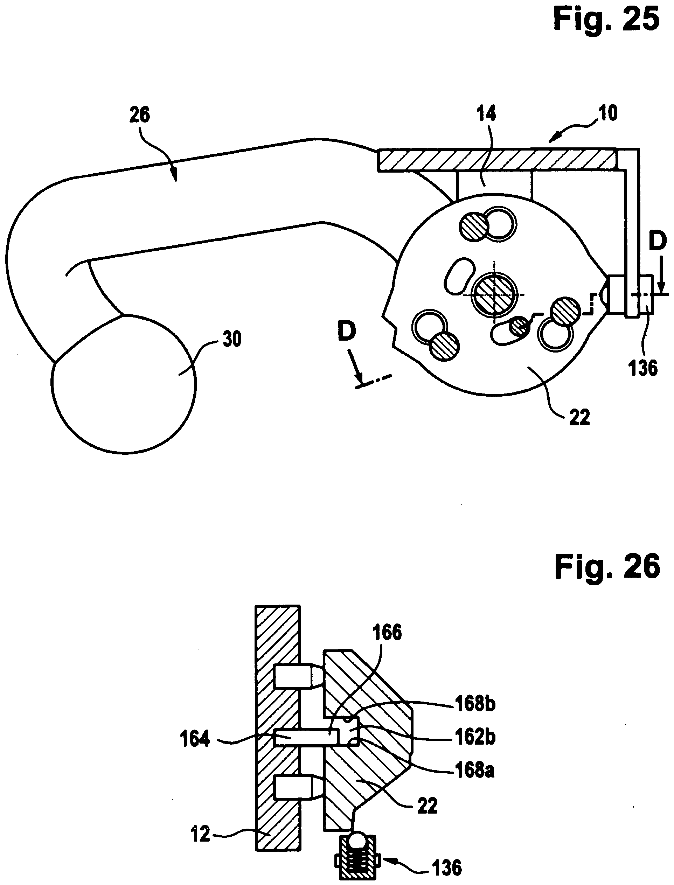

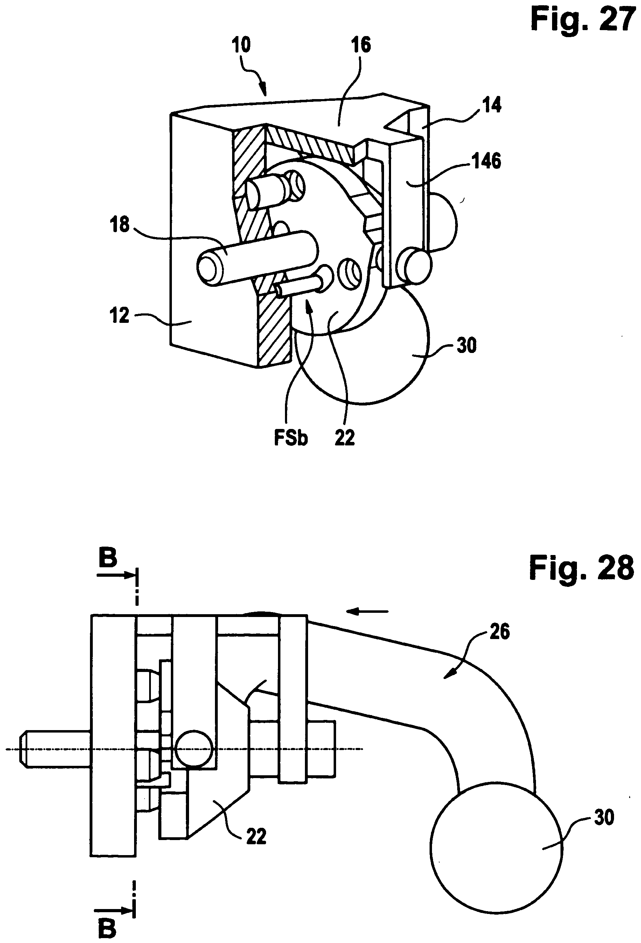

Bei Verschiebung des Lagerelements 22 über einen Teil des Weges von der Schwenkstellung S zur Fixierstellung F wird die Vorpositioniereinrichtung 130 unwirksam (Fig. 26) und ist somit nicht mehr in der Lage, eine Drehbewegung des Lagerelements 22 zu verhindern. Das Ausrichtelement 162b ist nun in gleicher Weise wie das Ausrichtelement 162a ausgebildet, so daß der Kugelhals 26 und das Lagerelement 22 die Möglichkeit haben, sich in Richtung der schwerkraftbedingten Schwenkrichtung 174 zu bewegen, und zwar so weit, bis der Endbereich 166 des Ausrichtelements 164 an der Endwand 168b anliegt, wie in Fig. 27 bis 29 dargestellt, wobei die Ausrichteinrichtung 160 derart angeordnete Ausrichtelemente 162b und 164 aufweist, daß die Formschlußelemente 62 und 64 wieder in einer miteinander fluchtenden Formschlußstellung FSb stehen.

Ist die der Ruhestellung R zugeordnete zweite Formschlußstellung FSb um 120° gegenüber der der Arbeitsstellung A zugeordneten ersten Formschlußstellung FSa versetzt, so können bei drei in gleichem Winkelabstand voneinander angeordneten Formschlußelementen 62, 64 dieselben Formschlußelemente auch zur formschlüssigen Fixierung der Ruhestellung R eingesetzt werden. Weicht der Schwenkwinkel zwischen der der Ruhestellung R zugeordneten Formschlußstellung und der der Arbeitsstellung A zugewandten Formschlußstellung von 120° ab, so sind für die formschlüssige Fixierung in der Ruhestellung R zusätzliche Formschlußelemente 62 vorzusehen, die neben den für die Arbeitsstellung A vorgesehenen Formschlußelementen 62 liegen, vorzugsweise in einem Winkelabstand von diesen angeordnet sind.

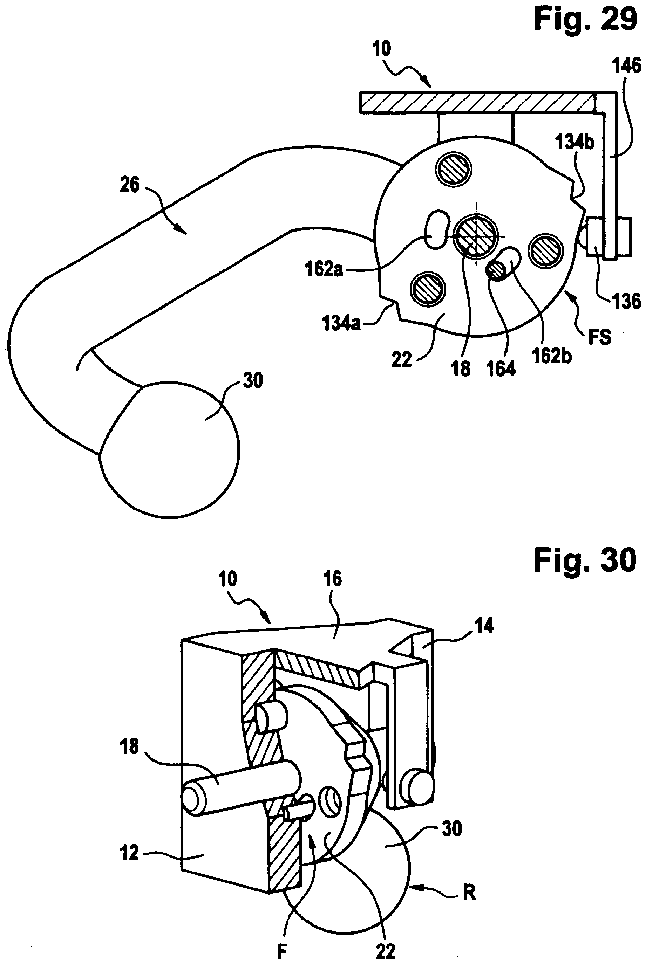

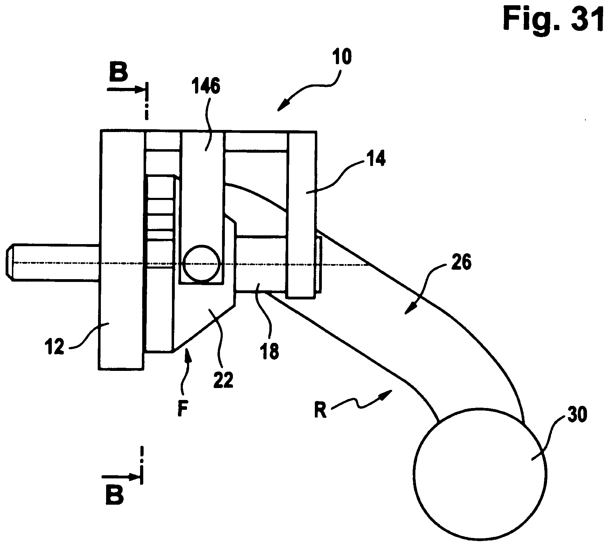

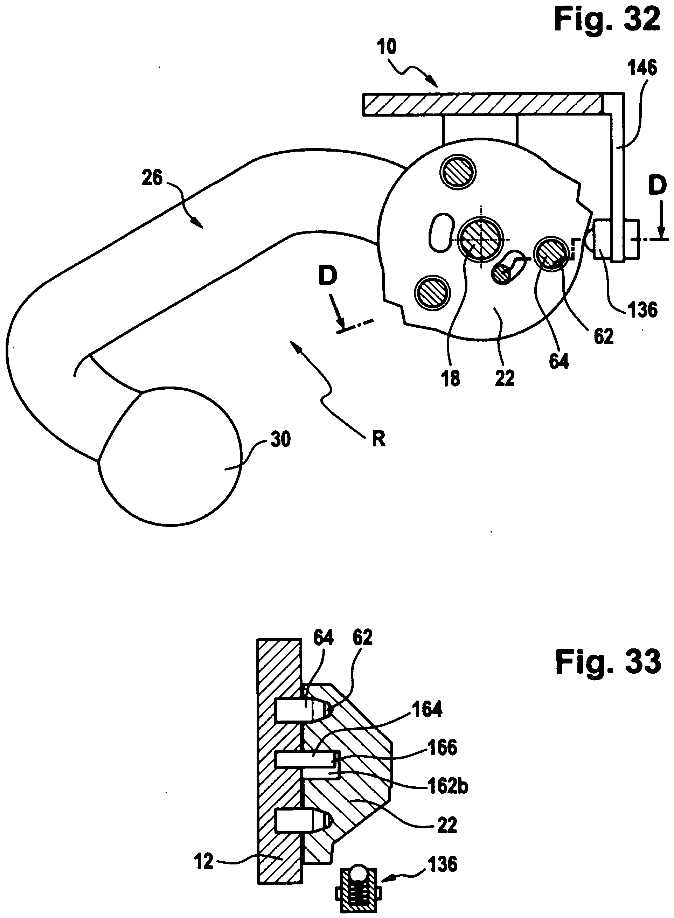

Die Verschiebeeinrichtung 80 kann nun dazu eingesetzt werden, wie in Fig. 30 bis 33 dargestellt, das Lagerelement 22 vollends in Richtung zur ersten Lagerwange 12 in die Fixierstellung F zu bewegen, in welcher eine spielfreie Fixierung des Lagerelements 22 in der Ruhestellung R erfolgt.

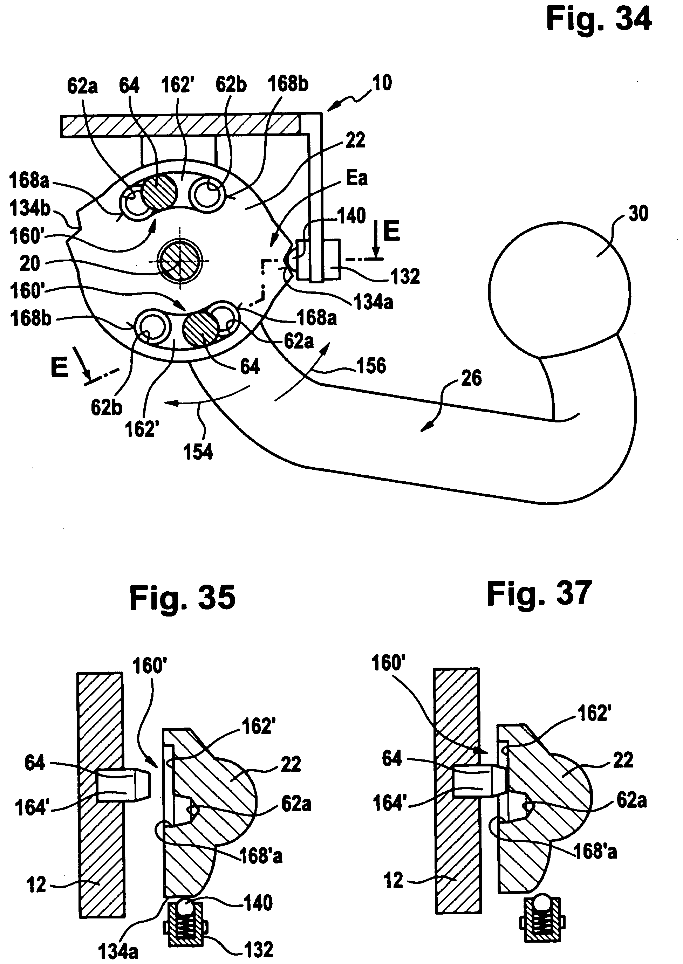

Bei einem zweiten Ausführungsbeispiel einer erfindungsgemäßen Anhängekupplung, dargestellt in Fig. 34 bis 40 ist die Ausrichteinrichtung 160' zwar auch durch eine Vertiefung 162' im Lagerelement 22 gebildet, allerdings ist die Vertiefung 162' so angeordnet, daß sie das erste Formschlußelement 62 im Lagerelement 22 überdeckt und sich ausgehend von dem für die Formschlußfixierung in der Arbeitsstellung vorgesehenen ersten Formschlußelement 62a in der Schwerkraftbewegungsrichtung 154 erstreckt.

Damit kann das zweite Formschlußelement 64 auch gleichzeitig das Ausrichtelement 164' bilden, da dieses Ausrichtelement 164' in der ersten Endstellung EA in das Ausrichtelement 162' eintauchen kann, obwohl die erste Formschlußstellung FSa noch nicht erreicht ist.

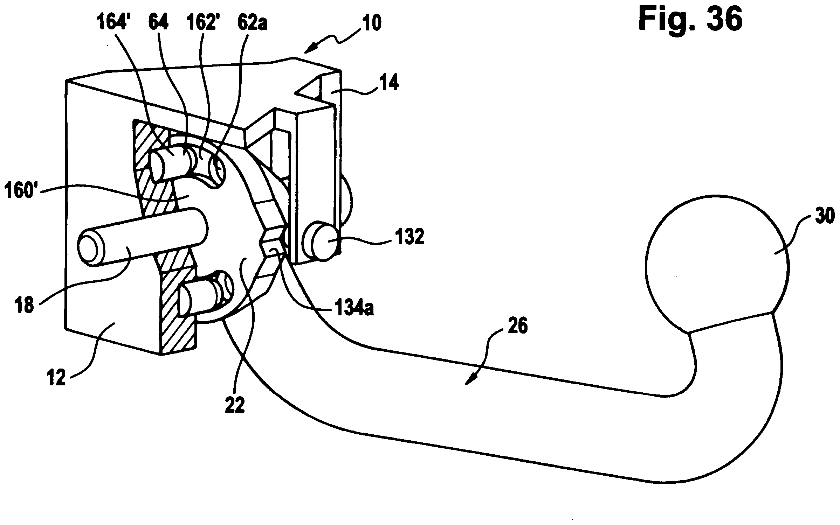

Wird ausgehend von der in Fig. 34 und 35 dargestellten ersten Endstellung Ea das Lagerelement 22 in Richtung der ersten Lagerwange 12 verschoben, so kommen die Ausrichtelemente 162' und 164' in Eingriff, bevor die Vorpositioniereinrichtung 130 wirkungslos wird, wie in Fig. 36 dargestellt.

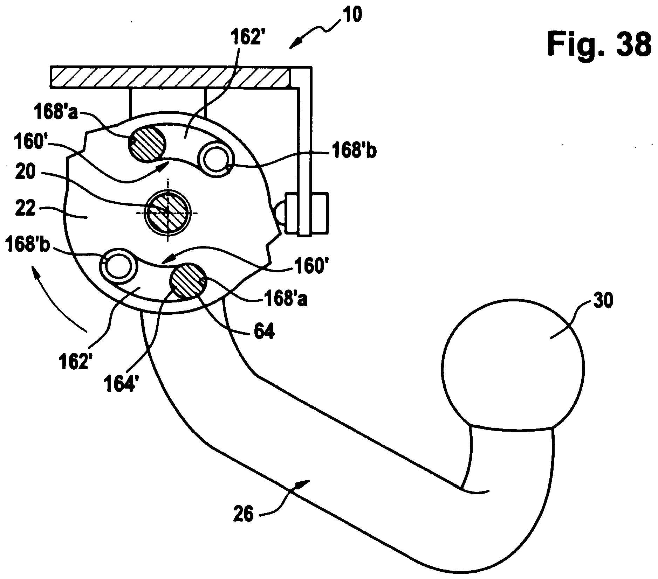

Unmittelbar nachdem die Vorpositioniereinrichtung 130 ihre Wirkung verloren hat, wie beispielsweise in Fig. 37 dargestellt, hat das Lagerelement 22 die Möglichkeit, in Richtung der schwerkraftbedingten Schwenkrichtung 154 zu verschwenken und dies führt dazu, daß das Ausrichtelement 164' an der Endwand 168'a des Ausrichtelements 162' zur Anlage kommt (Fig. 38).

Die Endwand 168'a liegt dabei fluchtend mit dem sich an diese anschließenden Teil des ersten Formschlußelements 62, so daß dann, wenn das Ausrichtelement 164' und somit auch das erste Formschlußelement 64 an der Endwand 168'a anliegen, das zweite Formschlußelement 64 und das erste Formschlußelement 62 in Formschlußstellung stehen.

In dieser in Fig. 38 dargestellten Formschlußstellung besteht somit die Möglichkeit, durch weiteres Verschieben des Lagerelements 22 in Richtung der ersten Lagerwange 12 die Formschlußelemente 62 und 64 in Eingriff zu bringen, in gleicher Weise wie im Zusammenhang mit dem ersten Ausführungsbeispiel beschrieben.

Bei dem zweiten Ausführungsbeispiel sind, wie sich aus Fig. 34 bereits ergibt, zwei erste Formschlußelemente 62a und 62b vorgesehen, wobei das erste Formschlußelement 62a der Arbeitsstellung zugeordnet ist und das erste Formschlußelement 62b der Ruhestellung.

Vorzugsweise erstreckt sich bei dem zweiten Ausführungsbeispiel das Ausrichtelement 162' als Vertiefung vom ersten Formschlußelement 62a bis zum ersten Formschlußelement 62b und überdeckt beide voll, wobei die Endwand 168'a des Ausrichtelements 162' mit einem dem anderen ersten Formschlußelement 62b abgewandten Teilbereich des ersten Formschlußelements 62a fluchtet und die Endwand 168'b mit einem dem anderen ersten Formschlußelement 62a abgewandten Teilbereich des ersten Formschlußelements 62b, so daß jede der Endwände 168'a und 168'b jeweils eine Formschlußstellung definiert, nämlich die Endwand 168'a die erste Formschlußstellung und die Endwand 168'b die zweite Formschlußstellung.

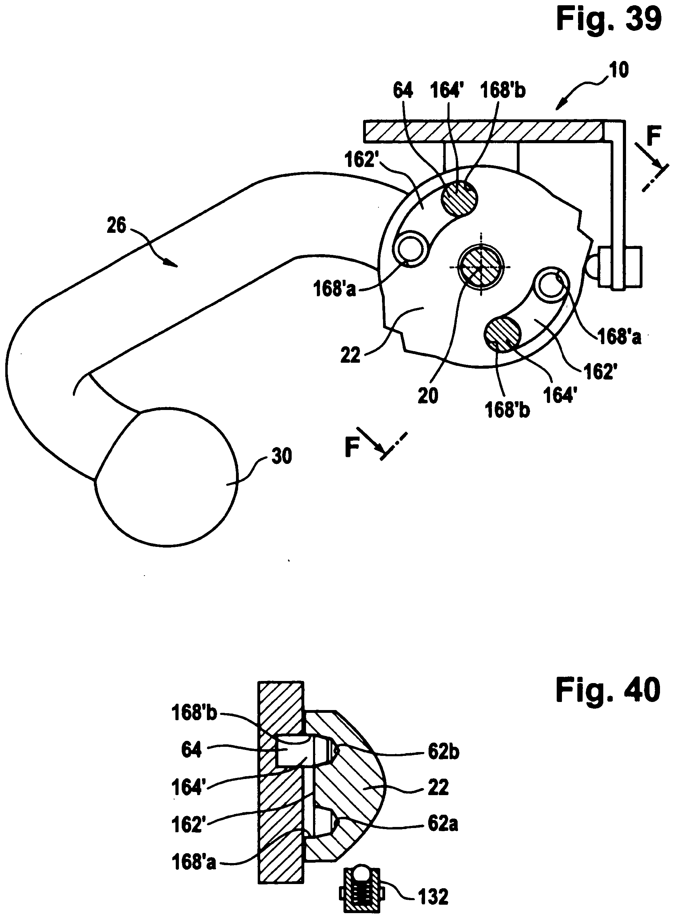

Wie in Fig. 39 und 40 dargestellt, besteht somit zur formschlüssigen Fixierung in der Ruhestellung ebenfalls die Möglichkeit, durch die Ausrichteinrichtung 160' die Ausrichtelemente 164' und 162' in der zweiten Endstellung Eb, die zeichnerisch nicht dargestellt ist, in Eingriff zu bringen, wodurch bei nicht mehr vorhandener Wirkung der Vorpositioniereinrichtung 130 das Lagerelement 22 sich ebenfalls in der schwerkraftbedingten Schwenkrichtung verschwenkt und das Ausrichtelement 164' an der Endwand 168'b zur Anlage kommt. Damit wirkt die Ausrichteinrichtung 160 des zweiten Ausführungsbeispiels vom Prinzip her in gleicher Weise, wie im Zusammenhang mit dem ersten Ausführungsbeispiel beschrieben.

Im übrigen sind beim zweiten Ausführungsbeispiel diejenigen Elemente, die mit dem ersten identisch sind, mit denselben Bezugszeichen versehen, so daß hinsichtlich der Beschreibung derselben vollinhaltlich auf die Ausführungen zum ersten Ausführungsbeispiel Bezug genommen wird.

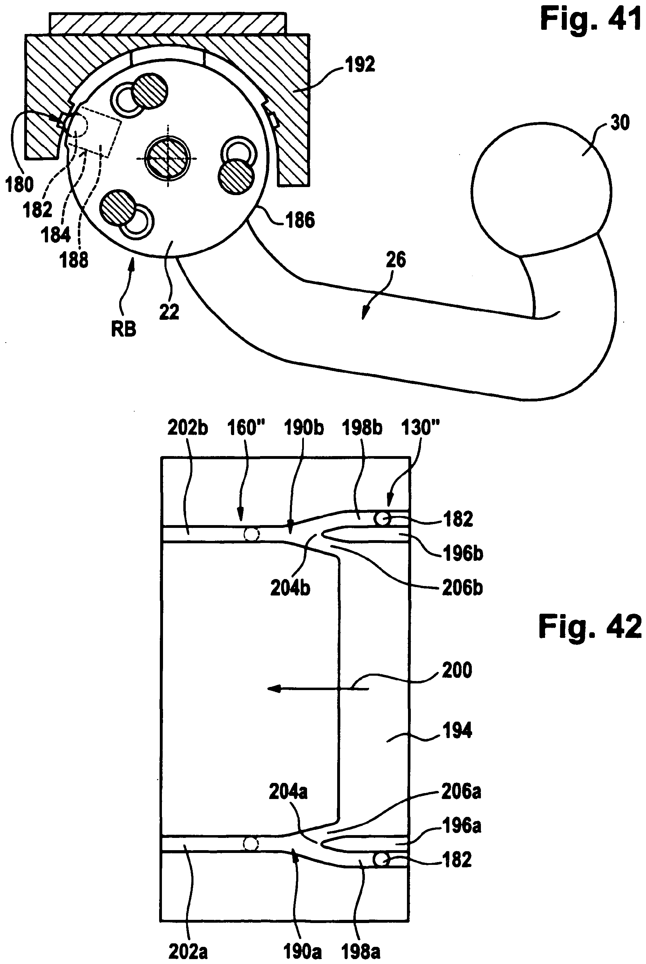

Bei einem dritten Ausführungsbeispiel einer erfindungsgemäßen Anhängekupplung, dargestellt in den Fig. 41 und 42 sind das Lagerelement 22 und die Lageraufnahme 10 der Antrieb 100 sowie der Kugelhals 26 und die Kupplungskugel 30 in gleicher Weise ausgebildet wie beim ersten Ausführungsbeispiel, so daß auf die Ausführungen hierzu vollinhaltlich Bezug genommen wird.

Im Gegensatz zum ersten Ausführungsbeispiel sind die Vorpositioniereinrichtung 130" und die Ausrichteinrichtung 160" durch andere Elemente gebildet, und zwar einerseits durch ein als Rastkugel 182 ausgebildetes Rastelement 180, die in einer Kugeldruckschraube 192 angeordnet ist, welche ihrerseits in dem Lagerelement 22 in einer Aufnahme 184 angeordnet ist, so daß lediglich die Rastkugel 180 über eine Außenkontur 186 des Lagerelements 22 übersteht.

Die Rastkugel 182 wirkt zum Erreichen der Arbeitsstellung A mit einem Nutensystem 190a in einem die Außenkontur 186 des Lagerelements 22 übergreifenden Körper 192 zusammen und zum Erreichen der Ruhestellung R mit einem Nutensystem 190b in dem Körper 192.

Die Nutensysteme 190a und 190b sind dabei im Prinzip identisch ausgebildet.

Die Nutensysteme 190a und 190b umfassen einen Freigangabschnitt 194, in welchem sich die Rastkugel 182 ungehindert bewegt, sofern der Kugelhals 26 unter der Wirkung der Schwerkraft in der nach unten hängenden, in Fig. 5 bis 7 dargestellten Stellung steht.

Wird der Kugelhals 26 in Richtung der Arbeitsstellung A bewegt, so ist ein an den Freigangabschnitt 194 sich anschließender Wulst 196a zu überwinden, an welchen sich ein äußerer Nutabschnitt 198a des Nutensystems 190a anschließt, welcher dazu führt, daß die in diesen eingreifende Rastkugel 182 den Kugelhals 26 in der ersten Endstellung Ea festlegt.

In gleicher Weise ist ein Festlegen des Kugelhalses 26 mit dem Lagerelement 22 in der zweiten Endstellung Eb, vorgesehen zum Erreichen der Ruhestellung R, dadurch möglich, daß der Kugelhals 26 so geschwenkt wird, daß die Rastkugel 182 in den Abschnitt 198b des Nutensystems 190b eingreift.

Die Abschnitte 198a und 198b der Nutensysteme 190a und 190b bilden damit zusammen mit der Rastkugel 182, die in jeden dieser Nutenabschnitte 198a und 198b eingreifen kann, die Vorpositioniereinrichtung 130".

Um von der Vorpositioniereinrichtung 130" zur Ausrichteinrichtung 160" überzugehen, ist - in gleicher Weise wie im Zusammenhang mit dem ersten Ausführungsbeispiel beschrieben - ein Verschieben des Lagerelements 22 in einer Richtung 200 zur ersten Lagerwange 12 hin durchzuführen.

Durch Bewegen des Lagerelements 22 in die Richtung 200 wandert auch die Rastkugel 182 von den Nutabschnitten 198a bzw. 198b weiter in die Nutabschnitte 202a und 202b der Nutensysteme 190a und 190b, welche zusammen mit der Rastkugel 182 die Ausrichteinrichtung 160' bilden, die zu einer Ausrichtung des Lagerelements 22 dahingehend führt, daß die Formschlußelemente 62, 64 miteinander in Eingriff bringbar sind. Die Ausrichteinrichtung 160' ist dabei bis zum Erreichen der Fixierstellung F und auch in dieser noch wirksam.

Die Nutabschnitte 198a und 202a bzw. 198b und 202b werden getrennt durch eine Verzweigungsstelle 204a und 204b, in welcher jeweils von dem Nutabschnitt 202a bzw. 202b aus gesehen zwei Nutabschnitte, nämlich die Nutabschnitte 198a und 198b sowie die Nutabschnitte 206a und 206b abzweigen, welch letztere in den Freigangabschnitt 194 münden.

Wird somit das Lagerelement 22 ausgehend von der Fixierstellung F wieder in Richtung der Schwenkstellung S bewegt, so wandert die Rastkugel 182 entlang den Nutabschnitten 202a bzw. 202b der Ausrichteinrichtung 160' und dann ausgehend von der Nutverzweigung 204a bzw. 204b aufgrund der auf den Kugelhals 26 wirkenden Schwerkraft in die Nutabschnitte 206a bzw. 206b und endet somit in dem Freigangabschnitt 194, in welchem die Rastkugel 182 eine Bewegung des Kugelhalses 26 und des Lagerelements 22 in Richtung der schwerkraftbedingten Schwenkrichtung nicht unterbindet, sondern diese Bewegung frei zuläßt, so daß der Kugelhals 26 in die in Fig. 5 bis 7 dargestellte Drehstellung nach unten fällt und auch das Lagerelement 22 entsprechend dreht.

Aus dieser Drehstellung heraus kann der Kugelhals 26 mitsamt dem Schwenkelement 22 wieder so verschwenkt werden, daß die Rastkugel 182 entweder mit dem Nutabschnitt 198a in Eingriff kommt, um die Arbeitsstellung zu erreichen, oder mit dem Nutabschnitt 198b, um beim Verschieben des Lagerelements 22 in der Richtung 200 die der Arbeitsstellung bzw. der Ruhestellung zugeordnete Formschlußstellung FS zu erreichen, in welcher die Formschlußelemente 62, 64 in Eingriff miteinander bringbar sind.

## Patentansprüche

1. Anhängekupplung für Kraftfahrzeuge umfassend einen Kugelhals (26), der an einem Ende (28) eine Kupplungskugel (30) und an einem anderen Ende (24) ein Lagerelement (22) trägt, eine fahrzeugfeste Lageraufnahme (10), an welcher das Lagerelement (22) mit dem Kugelhals (26) um eine Achse (20) zwischen einer Arbeitsstellung (A) und einer Ruhestellung (R) verschwenkbar gelagert ist, eine Formschlussfixiereinrichtung (60), welche das Lagerelement (22) relativ zur Lageraufnahme (10) zumindest in der Arbeitsstellung (A) formschlüssig fixiert, einen Fixierzustand, in welchem die Formschlussfixiereinrichtung (60) wirksam ist und einen Schwenkzustand, in welchem bei nicht vorhandener Einwirkung gegen ein Verschwenken unstabilisierte Drehstellungen des Lagerelements (22) vorliegen, **dadurch gekennzeichnet, dass** eine Vorpositioniereinrichtung (130) vorgesehen ist, welche das Lagerelement (22) beim Verschwenken in Richtung der Arbeitsstellung (A) in einer eine erste Endstellung (Ea) darstellenden Drehstellung gegen ein weiteres Verschwenken stabilisiert, und dass die erste Endstellung (Ea) derart angeordnet ist, dass von dieser ausgehend eine eine erste Formschlussstellung (FSa) darstellende Drehstellung erreicht wird, in welcher ein Übergang der Formschlussfixiereinrichtung (60) in ihre zur Fixierung der Arbeitsstellung (A) wirksame Stellung erfolgt und dass die erste Formschlussstellung (FSa) eine von der ersten Endstellung (Ea) abweichende Drehstellung ist.

2. Anhängekupplung nach Anspruch 1, **dadurch gekennzeichnet, dass** das Lagerelement (22) zwischen einer Fixierstellung (F), in welcher die Formschlussfixiereinrichtung (60) im Fixierzustand wirksam ist, und einer Schwenkstellung (S), in welcher die Formschlussfixiereinrichtung (60) unwirksam ist, in Richtung (32) der Achse (20) verschiebbar ist.

3. Anhängekupplung nach Anspruch 1, **dadurch gekennzeichnet, dass** das Lagerelement (22) durch eine Verschiebeeinrichtung (80) in Richtung (32) der Achse (20) verschiebbar ist.

4. Anhängekupplung nach einem der voranstehenden Ansprüche, **dadurch gekennzeichnet, dass** die Vorpositioniereinrichtung (130) in der Schwenkstellung (S) wirksam ist.

5. Anhängekupplung nach einem der voranstehenden Ansprüche, **dadurch gekennzeichnet, dass** die Formschlussfixiereinrichtung (60) durch Bewegen des in der ersten Endstellung (Ea) positionierten Lagerelements (22) von der Schwenkstellung (S) in die Fixierstellung (F) zur Wirkung bringbar ist.

6. Anhängekupplung nach Anspruch 5, **dadurch gekennzeichnet, dass** die Vorpositioniereinrichtung (130) derart ausgebildet ist, dass diese zumindest über einen Teil des Weges von der Schwenkstellung (S) in die Fixierstellung (F) die Verschiebung des Lagerelements (22) unter Beibehaltung der ersten Endstellung (Ea) zulässt.

7. Anhängekupplung nach einem der voranstehenden Ansprüche, **dadurch gekennzeichnet, dass** das Lagerelement (22) beim Bewegen in Richtung der Achse (20) von der Fixierstellung (F) in die Schwenkstellung (S) in eine eine erste Freigabestellung (FGa) darstellende Drehstellung bringbar ist, ausgehend von welcher das Lagerelement (22) unbeeinflusst von der Vorpositioniereinrichtung (130) schwenkbar ist.

8. Anhängekupplung nach Anspruch 7, **dadurch gekennzeichnet, dass** die erste Freigabestellung (FGa) eine von der ersten Endstellung (Ea) abweichende Drehstellung ist.

9. Anhängekupplung nach Anspruch 7 oder 8, **dadurch gekennzeichnet, dass** die erste Freigabestellung (FGa) eine in Richtung einer schwerkraftbedingten Schwenkrichtung (154) von der ersten Endstellung (Ea) abweichend angeordnete Drehstellung ist.

10. Anhängekupplung nach einem der voranstehenden Ansprüche, **dadurch gekennzeichnet, dass** die erste Formschlussstellung (FSa) eine in Richtung einer schwerkraftbedingten Schwenkrichtung (154) von der ersten Endstellung (Ea) abweichend angeordnete Drehstellung ist.

11. Anhängekupplung nach einem der Ansprüche 7 bis 10, **dadurch gekennzeichnet, dass** die erste Freigabestellung (FGa) eine in Richtung der schwerkraftbedingten Schwenkrichtung (154) von der ersten Formschlussstellung (FSa) abweichend angeordnete Drehstellung ist.

12. Anhängekupplung nach einem der voranstehenden Ansprüche, **dadurch gekennzeichnet, dass** mit der Vorpositioniereinrichtung (130) das Lagerelement (22) beim Verschwenken in Richtung der Ruhestellung (R) in einer eine zweite Endstellung (Eb) darstellenden Drehstellung festlegbar ist, und dass die zweite Endstellung (Eb) derart angeordnet ist, dass von dieser ausgehend eine eine zweite Formschlussstellung (FSb) darstellende Drehstellung erreichbar ist, in welcher die Formschlussfixiereinrichtung (60) in ihre zur Fixierung der Ruhestellung (R) wirksame Stellung bringbar ist.

13. Anhängekupplung nach Anspruch 12, **dadurch gekennzeichnet, dass** die Formschlussfixiereinrichtung (60) durch Bewegen des in der zweiten Endstellung (Eb) positionierten Lagerelements (22) von der Schwenkstellung (S) in die Fixierstellung zur Wirkung bringbar ist.

14. Anhängekupplung nach Anspruch 13, **dadurch gekennzeichnet, dass** die Vorpositioniereinrichtung (130) derart ausgebildet ist, dass diese zumindest über einen Teil des Weges von der Schwenkstellung (S) in die Fixierstellung (F) die Verschiebung des Lagerelements (22) unter Beibehaltung der zweiten Endstellung (Eb) zulässt.

15. Anhängekupplung nach einem der voranstehenden Ansprüche, **dadurch gekennzeichnet, dass** das Lagerelement (22) beim Bewegen in Richtung der Achse (20) von der Fixierstellung (F) in die Schwenkstellung (S) in eine eine zweite Freigabestellung (FGb) darstellende Drehstellung bringbar ist, ausgehend von welcher das Lagerelement (22) unbeeinflusst von der Vorpositioniereinrichtung (130) schwenkbar ist.

16. Anhängekupplung nach Anspruch 15, **dadurch gekennzeichnet, dass** die zweite Freigabestellung (FGb) eine von der zweiten Endstellung (Eb) abweichende Drehstellung ist.

17. Anhängekupplung nach Anspruch 16, **dadurch gekennzeichnet, dass** die zweite Freigabestellung (FGb) eine in Richtung einer schwerkraftbedingten Schwenkrichtung von der zweiten Endstellung (Eb) abweichend angeordnete Drehstellung ist.

18. Anhängekupplung nach einem der Ansprüche 12 bis 17, **dadurch gekennzeichnet, dass** die zweite Formschlussstellung (FSb) eine von der zweiten Endstellung (Eb) abweichende Drehstellung ist.

19. Anhängekupplung nach Anspruch 18, **dadurch gekennzeichnet, dass** die zweite Formschlussstellung (FSb) eine in Richtung einer schwerkraftbedingten Schwenkrichtung von der zweiten Endstellung (Eb) abweichend angeordnete Drehstellung ist.

20. Anhängekupplung nach einem der Ansprüche 12 bis 19, **dadurch gekennzeichnet, dass** die zweite Freigabestellung (FGb) eine in Richtung der schwerkraftbedingten Schwenkrichtung von der zweiten Formschlussstellung (FSb) abweichend angeordnete Drehstellung ist.

21. Anhängekupplung nach einem der voranstehenden Ansprüche, **dadurch gekennzeichnet, dass** die Vorpositioniereinrichtung (130) die jeweilige Endstellung (Ea, Eb) des Lagerelements (22) durch Formschluss stabilisiert.

22. Anhängekupplung nach Anspruch 21, **dadurch gekennzeichnet, dass** die Vorpositioniereinrichtung (130) mindestens ein erstes und mindestens ein zweites Rastelement (132, 134a, 190, 190a) aufweist, welche zum Stabilisieren der jeweiligen Endstellung (Ea, Eb) in Wirkverbindung bringbar sind.

23. Anhängekupplung nach Anspruch 22, **dadurch gekennzeichnet, dass** die Vorpositioniereinrichtung (130) mindestens ein weiteres Rastelement (134b, 190b) aufweist, welches zum Stabilisieren des Lagerelements (22) in der anderen Endstellung (Eb, Ea) in Wirkverbindung bringbar ist.

24. Anhängekupplung nach Anspruch 22 oder 23, **dadurch gekennzeichnet, dass** eines der zusammenwirkenden Rastelemente (132, 180) einen in eine Raststellung und aus dieser heraus bewegbaren Rastkörper (140, 182) umfasst und das andere der zusammenwirkenden Rastelemente als eine mit dem Rastkörper (140, 182) zusammenwirkende Rastkörperaufnahme (134a, b; 190a, b) ausgebildet ist.

25. Anhängekupplung nach Anspruch 24, **dadurch gekennzeichnet, dass** der Rastkörper (140, 182) federbeaufschlagt bewegbar ausgebildet ist.

26. Anhängekupplung nach Anspruch 24 oder 25, **dadurch gekennzeichnet, dass** der Rastkörper als Rastklinke ausgebildet ist.

27. Anhängekupplung nach Anspruch 25, **dadurch gekennzeichnet, dass** der Rastkörper als Rastkugel (140, 182) ausgebildet ist.

28. Anhängekupplung nach einem der Ansprüche 1 bis 20, **dadurch gekennzeichnet, dass** die Vorpositioniereinrichtung (130"") durch eine Bewegung des Lagerelements (22) von der Schwenkstellung (S) in Richtung der Fixierstellung (F) bis zu einer Positionierstellung (P) zur Wirkung bringbar ist.

29. Anhängekupplung nach Anspruch 28, **dadurch gekennzeichnet, dass** die Vorpositioniereinrichtung (130"") zwei durch die Bewegung in die Positionierstellung (P) formschlüssig in Eingriff bringbare Positionierelemente (224, 228) umfasst.

30. Anhängekupplung nach Anspruch 28 oder 29, **dadurch gekennzeichnet, dass** die Vorpositioniereinrichtung (130"") eine Verschiebeeinheit (80) umfasst, welche selbsttätig eine Verschiebung des Lagerelements (22) in die Positionierstellung (P) auslöst, wenn die Drehstellung des Lagerelements (22) ein Bewegen des Lagerelements (22) in die Positionierstellung (P) zulässt.

31. Anhängekupplung nach Anspruch 30, **dadurch gekennzeichnet, dass** die Vorpositioniereinrichtung (130"") das Bewegen des Lagerelements (22) in die Positionierstellung (P) dann auslöst, wenn die Drehstellung des Lagerelements (22) innerhalb eines Einfangbereichs (WB) liegt.

32. Anhängekupplung nach einem der Ansprüche 28 bis 31, **dadurch gekennzeichnet, dass** die Vorpositioniereinrichtung (130"") eine Steuereinheit (226) aufweist, welche zum Verschieben des Lagerelements (22) in die Positionierstellung (P) die Verschiebeeinrichtung (80) ansteuert.

33. Anhängekupplung nach einem der voranstehenden Ansprüche, **dadurch gekennzeichnet, dass** eine Ausrichteinrichtung (160) vorgesehen ist, mit welcher das Lagerelement (22) zum Wirksamwerden der Formschlussfixiereinrichtung (60) in die erste Formschlussstellung (FSa) bringbar ist.

34. Anhängekupplung nach Anspruch 33, **dadurch gekennzeichnet, dass** die Ausrichteinrichtung (160) derart ausgebildet ist, dass sie unter Beibehaltung der ersten Formschlussstellung (FSa) eine Bewegung des Lagerelements (22) in Richtung (32) der Fixierstellung (F) zulässt.

35. Anhängekupplung nach einem der voranstehenden Ansprüche, **dadurch gekennzeichnet, dass** eine Ausrichteinrichtung (160) vorgesehen ist, mit welcher das Lagerelement (22) zum Wirksamwerden der Formschlussfixiereinrichtung (60) in die zweite Formschlussstellung (FSb) bringbar ist.

36. Anhängekupplung nach Anspruch 35, **dadurch gekennzeichnet, dass** die Ausrichteinrichtung (160) derart ausgebildet ist, dass sie unter Beibehaltung der zweiten Formschlussstellung (FSb) eine Bewegung des Lagerelements (22) in Richtung (32) der Fixierstellung (F) zulässt.

37. Anhängekupplung nach einem der Ansprüche 33 bis 36, **dadurch gekennzeichnet, dass** bei einer Bewegung des in der jeweiligen Endstellung (Ea, Eb) stehenden Lagerelements (22) von der Schwenkstellung (S) in Richtung der Fixierstellung (F) die Ausrichteinrichtung (160) wirksam wird, bevor die Vorpositioniereinrichtung (130) ihre Wirkung verliert.

38. Anhängekupplung nach einem der Ansprüche 33 bis 37, **dadurch gekennzeichnet, dass** die Ausrichteinrichtung (160) derart ausgebildet ist, dass beim Übergang des Lagerelements (22) von der Fixierstellung (F) in die Schwenkstellung (S) das Lagerelement (22) die Freigabestellung (FG) erreicht.

39. Anhängekupplung nach einem der Ansprüche 33 bis 38, **dadurch gekennzeichnet, dass** die Ausrichteinrichtung (160) zum Vorgeben jeder der Formschlussstellungen (FS) ein Ausrichtelement (164, 162) und eine an diesem anlegbare Ausrichtfläche (168, 202a, b) umfasst.

40. Anhängekupplung nach Anspruch 39, **dadurch gekennzeichnet, dass** die Ausrichtfläche (168, 202a, b) durch eine schwerkraftbedingte Schwenkbewegung des Lagerelements (22) an dem Ausrichtelement (164, 182) anlegbar ist.

41. Anhängekupplung nach einem der Ansprüche 33 bis 40, **dadurch gekennzeichnet, dass** die Ausrichtfläche (168, 168', 168"", 202a, b, 228) durch eine Wand einer Ausnehmung 162, 162', 162"", 202a, b, 62) gebildet ist.

42. Anhängekupplung nach einem der Ansprüche 33 bis 40, **dadurch gekennzeichnet, dass** die Ausrichtfläche (168, 168', 168"", 228) mit einem Teilbereich von einem Formschlusselement (62) der Formschlussfixiereinrichtung (60) fluchtet.

43. Anhängekupplung nach einem der Ansprüche 33 bis 42, **dadurch gekennzeichnet, dass** mit der Ausrichteinrichtung (160', 160"") das Lagerelement (22) in Richtung der jeweiligen Formschlussstellung (FS) schwenkbar ist.

44. Anhängekupplung nach einem der Ansprüche 33 bis 41, **dadurch gekennzeichnet, dass** die Ausrichteinrichtung (160"") auch als Vorpositioniereinrichtung (130"") wirksam ist.

45. Anhängekupplung nach einem der voranstehenden Ansprüche, **dadurch gekennzeichnet, dass** die Formschlussfixiereinrichtung (60) mindestens ein an dem Lagerelement (22) angeordnetes erstes (62) und mindestens ein an der Lageraufnahme (10) angeordnetes zweites Formschlusselement (64) aufweist und dass das erste (62) und das zweite Formschlusselement (64) durch eine Relativbewegung derselben in Richtung (32) der Schwenkachse (20) miteinander in Eingriff bringbar sind.

46. Anhängekupplung nach Anspruch 45, **dadurch gekennzeichnet, dass** das erste und das zweite Formschlusselement (62, 64) derart ausgebildet sind, dass diese in der jeweiligen Formschlussstellung (FS) in formschlüssigen Eingriff bringbar sind.

47. Anhängekupplung nach Anspruch 46, **dadurch gekennzeichnet, dass** das erste und das zweite Formschlusselement (62, 64) derart ausgebildet sind, dass diese in der jeweiligen Formschlussstellung (FS) in spielfreien Eingriff miteinander bringbar sind.

48. Anhängekupplung nach einem der voranstehenden Ansprüche, **dadurch gekennzeichnet, dass** die Formschlussfixiereinrichtung (60) so ausgebildet ist, dass durch Bewegung des Lagerelements (22) relativ zur Lageraufnahme (10) das erste und das zweite Formschlusselement (62, 64) in Eingriff miteinander bringbar sind.

49. Anhängekupplung nach einem der Ansprüche 3 bis 48, **dadurch gekennzeichnet, dass** der Verschiebeeinrichtung (80) eine Spindel (82) und eine Spindelmutter (88) aufweist.

50. Anhängekupplung nach Anspruch 49, **dadurch gekennzeichnet, dass** die Spindel (82) drehfest mit dem Lagerelement (22) verbunden ist und die Spindelmutter (88) an der Lageraufnahme (10) drehbar, jedoch in Richtung (32) der Achse (20) unverschiebbar gelagert ist.

51. Anhängekupplung nach Anspruch 50, **dadurch gekennzeichnet, dass** die Spindelmutter (88) durch einen Antrieb (100) antreibbar ist.

52. Anhängekupplung nach Anspruch 51, **dadurch gekennzeichnet, dass** der Antrieb (100) selbstsperrend zusammenwirkende Getriebeelemente (126) umfasst.

53. Anhängekupplung nach Anspruch 51 oder 52, **dadurch gekennzeichnet, dass** der Antrieb (100) einen Motor (116) umfasst.

## Claims

1. Trailer coupling for motor vehicles comprising a ball neck (26) bearing a coupling ball (30) at one end (28) and a bearing element (22) at another end (24), a bearing receptacle (10) fixed on the vehicle, the bearing element (22) being mounted therein with the ball neck (26) for pivoting movement about an axis (20) between a working position (A) and a rest position (R), a form-locking securing device (60) securing the bearing element (22) relative to the bearing receptacle (10) in a form-locking manner at least in the working position (A), a securing state wherein the form-locking securing device (60) is operative and a pivoting state wherein unstabilized rotary positions of the bearing element (22) are present when no action against pivoting is taken,
**characterized in that** a prepositioning device (130) is provided for stabilizing the bearing element (22), during its pivoting in the direction of the working position (A), against any further pivoting in a rotary position representing a first end position (Ea), and that the first end position (Ea) is arranged such that proceeding from it a rotary position representing a first form-locking position (FSa) is reached, a transition of the form-locking securing device (60) into its position effective for securing the working position (A) taking place in said rotary position and **in that** the first form-locking position (FSa) is a rotary position deviating from the first end position (Ea).

2. Trailer coupling as defined in claim 1, **characterized in that** the bearing element (22) is displaceable in the direction (32) of the axis (20) between a securing position (F), the form-locking securing device (60) being operative in the securing state in said position, and a pivoting position (S), the form-locking securing device (60) being inoperative in said position.

3. Trailer coupling as defined in claim 1, **characterized in that** the bearing element (22) is displaceable in the direction (32) of the axis (20) by way of a displacement device (80).

4. Trailer coupling as defined in any one of the preceding claims, **characterized in that** the prepositioning device (130) is operative in the pivoting position (S).

5. Trailer coupling as defined in any one of the preceding claims, **characterized in that** the form-locking securing device (60) is operable by way of movement of the bearing element (22) positioned in the first end position (Ea) from the pivoting position (S) into the securing position (F).

6. Trailer coupling as defined in claim 5, **characterized in that** the prepositioning device (130) is designed such that it allows the displacement of the bearing element (22) whilst retaining the first end position (Ea) at least over part of the distance from the pivoting position (S) into the securing position (F).

7. Trailer coupling as defined in any one of the preceding claims, **characterized in that** during movement in the direction of the axis (20) from the securing position (F) into the pivoting position (S) the bearing element (22) is able to be brought into a rotary position representing a first release position (FGa) and proceeding from said position the bearing element (22) is pivotable unaffected by the prepositioning device (130).

8. Trailer coupling as defined in claim 7, **characterized in that** the first release position (FGa) is a rotary position deviating from the first end position (Ea).

9. Trailer coupling as defined in claim 7 or 8, **characterized in that** the first release position (FGa) is a rotary position arranged to deviate from the first end position (Ea) in the direction of a pivoting direction (154) contingent on the force of gravity.

10. Trailer coupling as defined in any one of the preceding claims, **characterized in that** the first form-locking position (FSa) is a rotary position arranged to deviate from the first end position (Ea) in the direction of a pivoting direction (154) contingent on the force of gravity.

11. Trailer coupling as defined in any one of claims 7 to 10, **characterized in that** the first release position (FGa) is a rotary position arranged to deviate from the first form-locking position (FSa) in the direction of the pivoting direction (154) contingent on the force of gravity.

12. Trailer coupling as defined in any one of the preceding claims, **characterized in that** with the prepositioning device (130) the bearing element (22) is securable in a rotary position representing a second end position (Eb) during pivoting in the direction of the rest position (R), and that the second end position (Eb) is arranged such that proceeding from said position a rotary position representing a second form-locking position (FSb) is reachable, the form-locking securing device (60) able to be brought into its operative position for securing the rest position (R) in said rotary position.

13. Trailer coupling as defined in claim 12, **characterized in that** the form-locking securing device (60) is operable due to movement of the bearing element (22) positioned in the second end position (Eb) from the pivoting position (S) into the securing position.

14. Trailer coupling as defined in claim 13, **characterized in that** the prepositioning device (130) is designed such that it allows the displacement of the bearing element (22) whilst retaining the second end position (Eb) at least over part of the distance from the pivoting position (S) into the securing position (F).

15. Trailer coupling as defined in any one of the preceding claims, **characterized in that** the bearing element (22) is able to be brought into a rotary position representing a second release position (FGb) during movement in the direction of the axis (20) from the securing position (F) into the pivoting position (S) and proceeding from said rotary position the bearing element (22) is pivotable unaffected by the prepositioning device (130).

16. Trailer coupling as defined in claim 15, **characterized in that** the second release position (FGb) is a rotary position deviating from the second end position (Eb).

17. Trailer coupling as defined in claim 16, **characterized in that** the second release position (FGb) is a rotary position arranged to deviate from the second end position (Eb) in the direction of a pivoting direction contingent on the force of gravity.

18. Trailer coupling as defined in any one of claims 12 to 17, **characterized in that** the second form-locking position (FSb) is a rotary position deviating from the second end position (Eb).

19. Trailer coupling as defined in claim 18, **characterized in that** the second form-locking position (FSb) is a rotary position arranged to deviate from the second end position (Eb) in the direction of a pivoting direction contingent on the force of gravity.

20. Trailer coupling as defined in any one of claims 12 to 19, **characterized in that** the second release position (FGb) is a rotary position arranged to deviate from the second form-locking position (FSb) in the direction of the pivoting direction contingent on the force of gravity.

21. Trailer coupling as defined in any one of the preceding claims, **characterized in that** the prepositioning device (130) stabilizes the respective end positions (Ea, Eb) of the bearing element (22) by way of form-locking.

22. Trailer coupling as defined in claim 21, **characterized in that** the prepositioning device (130) has at least one first and at least one second snap-in element (132, 134a, 190, 190a) operatively connectable for stabilizing the respective end position (Ea, Eb).

23. Trailer coupling as defined in claim 22, **characterized in that** the prepositioning device (130) has at least one additional snap-in element (134b, 190b) operatively connectable for stabilizing the bearing element (22) in the other end position (Eb, Ea).

24. Trailer coupling as defined in claim 22 or 23, **characterized in that** one of the interacting snap-in elements (132, 180) comprises a snap-in member (140, 182) movable into a snap-in position and out of it and the other one of the interacting snap-in elements is designed as a snap-in member receptacle (134a, b; 190a, b) interacting with the snap-in member (140, 182).

25. Trailer coupling as defined in claim 24, **characterized in that** the snap-in member (140, 182) is designed to be movable by way of spring action.

26. Trailer coupling as defined in claim 24 or 25, **characterized in that** the snap-in member is designed as a snap-in detent.

27. Trailer coupling as defined in claim 25, **characterized in that** the snap-in member is designed as a snap-in sphere (140, 182).

28. Trailer coupling as defined in any one of claims 1 to 20, **characterized in that** the prepositioning device (130"") is operable by way of movement of the bearing element (22) from the pivoting position (S) in the direction of the securing position (F) as far as a locating position (P).

29. Trailer coupling as defined in claim 28, **characterized in that** the prepositioning device (130"") comprises two positioning elements (224, 228) engageable in a form-locking manner due to the movement into the locating position (P).

30. Trailer coupling as defined in claim 28 or 29, **characterized in that** the prepositioning device (130"") comprises a displacement unit (80) automatically triggering displacement of the bearing element (22) into the locating position (P) when the rotary position of the bearing element (22) allows movement of the bearing element (22) into the locating position (P).

31. Trailer coupling as defined in claim 30, **characterized in that** the prepositioning device (130"") triggers the movement of the bearing element (22) into the locating position (P) when the rotary position of the bearing element (22) is within a capture range (WB).

32. Trailer coupling as defined in any one of claims 28 to 31, **characterized in that** the prepositioning device (130"") has a control unit (226) activating the displacement device (80) for displacing the bearing element (22) into the locating position (P).

33. Trailer coupling as defined in any one of the preceding claims, **characterized in that** an aligning device (160) is provided for bringing the bearing element (22) into the first form-locking position (FSa) in order for the form-locking securing device (60) to come into effect.

34. Trailer coupling as defined in claim 33, **characterized in that** the aligning device (160) is designed such that it allows movement of the bearing element (22) in the direction (32) of the securing position (F) whilst retaining the first form-locking position (FSa).

35. Trailer coupling as defined in any one of the preceding claims, **characterized in that** an aligning device (160) is provided for bringing the bearing element (22) into the second form-locking position (FSb) in order for the form-locking securing device (60) to come into effect.

36. Trailer coupling as defined in claim 35, **characterized in that** the aligning device (160) is designed such that it allows movement of the bearing element (22) in the direction (32) of the securing position (F) whilst retaining the second form-locking position (FSb).

37. Trailer coupling as defined in any one of claims 33 to 36, **characterized in that** during movement of the bearing element (22) located in the respective end position (Ea, Eb) from the pivoting position (S) in the direction of the securing position (F) the aligning device (160) will become operative before the prepositioning device (130) loses its effect.

38. Trailer coupling as defined in any one of claims 33 to 37, **characterized in that** the aligning device (160) is designed such that during the transition of the bearing element (22) from the securing position (F) into the pivoting position (S) the bearing element (22) reaches the release position (FG).

39. Trailer coupling as defined in any one of claims 33 to 38, **characterized in that** the aligning device (160) comprises an aligning element (164, 162) and an aligning surface (168, 202a, b) adapted to abut thereon for predetermining each of the form-locking positions (FS).

40. Trailer coupling as defined in claim 39, **characterized in that** the aligning surface (168, 202a, b) is able to abut on the aligning element (164, 182) due to a pivoting movement of the bearing element (22) contingent on the force of gravity.

41. Trailer coupling as defined in any one of claims 33 to 40, **characterized in that** the aligning surface (168, 168', 168"", 202a, b, 228) is formed by a wall of a recess (162, 162', 162"", 202a, b, 62).

42. Trailer coupling as defined in any one of claims 33 to 40, **characterized in that** the aligning surface (168, 168', 168"", 228) aligns with a section of a form-locking element (62) of the form-locking securing device (60).

43. Trailer coupling as defined in any one of claims 33 to 42, **characterized in that** the bearing element (22) is pivotable with the aligning device (160', 160"") in the direction of the respective form-locking position (FS).

44. Trailer coupling as defined in any one of claims 33 to 41, **characterized in that** the aligning device (160"") is also operative as prepositioning device (130").

45. Trailer coupling as defined in any one of the preceding claims, **characterized in that** the form-locking securing device (60) has at least one first form-locking element (62) arranged on the bearing element (22) and at least one second form-locking element (64) arranged on the bearing receptacle (10) and that the first form-locking element (62) and the second form-locking element (64) are engageable with one another due to a relative movement thereof in the direction (32) of the pivot axis (20).

46. Trailer coupling as defined in claim 45, **characterized in that** the first and the second form-locking elements (62, 64) are designed such that they are engageable in a form-locking manner in the respective form-locking position (FS).

47. Trailer coupling as defined in claim 46, **characterized in that** the first and the second form-locking elements (62, 64) are designed such that they are engageable with one another in a clearance-free manner in the respective form-locking position (FS).

48. Trailer coupling as defined in any one of the preceding claims, **characterized in that** the form-locking securing device (60) is designed such that the first and the second form-locking elements (62, 64) are engageable with one another due to movement of the bearing element (22) relative to the bearing receptacle (10).

49. Trailer coupling as defined in any one of claims 3 to 48, **characterized in that** the displacement device (80) has a spindle (82) and a spindle nut (88).

50. Trailer coupling as defined in claim 49, **characterized in that** the spindle (82) is connected non-rotatably to the bearing element (22) and the spindle nut (88) is rotatable on the bearing receptacle (10) but is mounted so as to be non-displaceable in the direction (32) of the axis (20).

51. Trailer coupling as defined in claim 50, **characterized in that** the spindle nut (88) is drivable by a drive (100).

52. Trailer coupling as defined in claim 51, **characterized in that** the drive (100) comprises gear elements (126) interacting in a self-locking manner.

53. Trailer coupling as defined in claim 51 or 52, **characterized in that** the drive (100) comprises a motor (116).

## Revendications

1. Attelage pour des véhicules automobiles comprenant un col de boule d'attelage (26), qui porte à une extrémité (28) une boule d'attelage (30) et à une autre extrémité (24) un élément de palier (22), un logement de palier (10) fixé au véhicule au niveau duquel l'élément de palier (22) est logé de manière pivotante avec le col de boule d'attelage (26) autour d'un axe (20) entre une position de travail (A) et une position de repos (R), un dispositif de fixation à complémentarité de formes (60) qui fixe à complémentarité de formes l'élément de palier (22) par rapport au logement de palier (10) au moins dans la position de travail (A), un état de fixation dans lequel le dispositif de fixation à complémentarité de formes (60) est actif et un état de pivotement dans lequel, en cas de non-action contre un pivotement, des positions de rotation de l'élément de palier (22) non stabilisées sont présentes,
**caractérisé en ce qu'**un dispositif de prépositionnement (130) est prévu, lequel stabilise l'élément de palier (22) lors du pivotement en direction de la position de travail (A) dans une position de rotation représentant une première position d'extrémité (Ea) contre un autre pivotement, et que la première position d'extrémité (Ea) est agencée de telle manière qu'à partir de celle-ci une position de rotation représentant une première position à complémentarité de formes (FSa) soit atteinte, dans laquelle une transition du dispositif de fixation à complémentarité de formes (60) dans sa position active pour la fixation de la position de travail (A) est effectuée et **en ce que** la première position à complémentarité de formes (FSa) est une position de rotation divergeant de la première position d'extrémité (Ea).

2. Attelage selon la revendication 1, **caractérisé en ce que** l'élément de palier (22) est mobile entre une position de fixation (F) dans laquelle le dispositif de fixation à complémentarité de formes (60) est actif dans l'état de fixation, et une position de pivotement (S) dans laquelle le dispositif de fixation à complémentarité de formes (60) est inactif, en direction (32) de l'axe (20).

3. Attelage selon la revendication 1, **caractérisé en ce que** l'élément de palier (22) est mobile par un dispositif de déplacement (80) en direction (32) de l'axe (20).

4. Attelage selon l'une quelconque des revendications précédentes, **caractérisé en ce que** le dispositif de prépositionnement (130) est actif dans la position de pivotement (S).

5. Attelage selon l'une quelconque des revendications précédentes, **caractérisé en ce que** le dispositif de fixation à complémentarité de formes (60) peut être amené en action par le déplacement de l'élément de palier (22) positionné dans la première position d'extrémité (Ea) de la position de pivotement (S) à la position de fixation (F).

6. Attelage selon la revendication 5, **caractérisé en ce que** le dispositif de prépositionnement (130) est réalisé de telle manière que celui-ci autorise, au moins sur une partie de la course de la position de pivotement (S) dans la position de fixation (F), le déplacement de l'élément de palier (22) en conservant la première position d'extrémité (Ea).

7. Attelage selon l'une quelconque des revendications précédentes, **caractérisé en ce que** l'élément de palier (22) peut être amené, lors du déplacement en direction de l'axe (20) de la position de fixation (F) dans la position de pivotement (S), dans une position de rotation représentant une première position de libération (FGa), à partir de laquelle l'élément de palier (22) peut pivoter sans influence du dispositif de prépositionnement (130).

8. Attelage selon la revendication 7, **caractérisé en ce que** la première position de libération (FGa) est une position de rotation divergeant de la première position d'extrémité (Ea).

9. Attelage selon la revendication 7 ou 8, **caractérisé en ce que** la première position de libération (FGa) est une position de rotation agencée en direction d'une direction de pivotement (154) soumise à la force de gravité divergeant de la première position d'extrémité (Ea).

10. Attelage selon l'une quelconque des revendications précédentes, **caractérisé en ce que** la première position à complémentarité de formes (FSa) est une position de rotation agencée en direction d'une direction de pivotement (154) soumise à la force de gravité divergeant de la première position d'extrémité (Ea).

11. Attelage selon l'une quelconque des revendications 7 à 10, **caractérisé en ce que** la première position de libération (FGa) est une position de rotation agencée en direction de la direction de pivotement (154) soumise à la force de gravité divergeant de la première position à complémentarité de formes (FSa).

12. Attelage selon l'une quelconque des revendications précédentes, **caractérisé en ce qu'**avec le dispositif de prépositionnement (130) l'élément de palier (22) peut être fixé, lors du pivotement en direction de la position de repos (R), dans une position de rotation représentant une seconde position d'extrémité (Eb), et que la seconde position d'extrémité (Eb) est agencée de telle manière qu'à partir de celle-ci une position de rotation représentant une seconde position à complémentarité de formes (FSb) puisse être atteinte dans laquelle le dispositif de fixation à complémentarité de formes (60) peut être amené dans sa position active pour la fixation de la position de repos (R).

13. Attelage selon la revendication 12, **caractérisé en ce que** le dispositif de fixation à complémentarité de formes (60) peut être amené en action par le déplacement de l'élément de palier (22) positionné dans la seconde position d'extrémité (Eb) de la position de pivotement (S) à la position de fixation.

14. Attelage selon la revendication 13, **caractérisé en ce que** le dispositif de prépositionnement (130) est réalisé de telle manière que celui-ci autorise, au moins sur une partie de la course de la position de pivotement (S) à la position de fixation (F), le déplacement de l'élément de palier (22) en conservant la seconde position d'extrémité (Eb).

15. Attelage selon l'une quelconque des revendications précédentes, **caractérisé en ce que** l'élément de palier (22) peut être amené, lors du déplacement en direction de l'axe (20) de la position de fixation (F) à la position de pivotement (S), dans une position de rotation représentant une seconde position de libération (FGb), à partir de laquelle l'élément de palier (22) peut être pivoté sans influence du dispositif de prépositionnement (130).

16. Attelage selon la revendication 15, **caractérisé en ce que** la seconde position de libération (FGb) est une position de rotation divergeant de la seconde position d'extrémité (Eb).

17. Attelage selon la revendication 16, **caractérisé en ce que** la seconde position de libération (FGb) est une position de rotation agencée en direction d'une direction de pivotement soumise à la force de gravité divergeant de la seconde position d'extrémité (Eb).

18. Attelage selon l'une quelconque des revendications 12 à 17, **caractérisé en ce que** la seconde position à complémentarité de formes (FSb) est une position de rotation divergeant de la seconde position d'extrémité (Eb).

19. Attelage selon la revendication 18, **caractérisé en ce que** la seconde position à complémentarité de formes (FSb) est une position de rotation agencée en direction d'une direction de pivotement soumise à la force de gravité divergeant de la seconde position d'extrémité (Eb).

20. Attelage selon l'une quelconque des revendications 12 à 19, **caractérisé en ce que** la seconde position de libération (FGb) est une position de rotation agencée en direction de la direction de pivotement soumise à la force de gravité divergeant de la seconde position à complémentarité de formes (FSb).

21. Attelage selon l'une quelconque des revendications précédentes, **caractérisé en ce que** le dispositif de prépositionnement (130) stabilise la position d'extrémité (Ea, Eb) respective de l'élément de palier (22) par liaison à complémentarité de formes.

22. Attelage selon la revendication 21, **caractérisé en ce que** le dispositif de prépositionnement (130) présente au moins un premier et au moins un second élément d'encliquetage (132, 134a, 190, 190a) qui peuvent être amenés en liaison active pour la stabilisation de la position d'extrémité (Ea, Eb) respective.

23. Attelage selon la revendication 22, **caractérisé en ce que** le dispositif de prépositionnement (130) présente au moins un autre élément d'encliquetage (134b, 190b) qui peut être amené en liaison active pour la stabilisation de l'élément de palier (22) dans l'autre position d'extrémité (Eb, Ea).

24. Attelage selon la revendication 22 ou 23, **caractérisé en ce qu'**un des éléments d'encliquetage (132, 180) coopérants comprend un corps d'encliquetage (140, 182) mobile dans une position d'encliquetage et hors de celle-ci et l'autre des éléments d'encliquetage coopérants est réalisé en tant que logement de corps d'encliquetage (134a, b ; 190a, b) coopérant avec le corps d'encliquetage (140, 182).

25. Attelage selon la revendication 24, **caractérisé en ce que** le corps d'encliquetage (140, 182) est réalisé de manière mobile par sollicitation par ressort.

26. Attelage selon la revendication 24 ou 25, **caractérisé en ce que** le corps d'encliquetage est réalisé en tant que cliquet d'encliquetage.

27. Attelage selon la revendication 25, **caractérisé en ce que** le corps d'encliquetage est réalisé en tant que boule d'encliquetage (140, 182).

28. Attelage selon l'une quelconque des revendications 1 à 20, **caractérisé en ce que** le dispositif de prépositionnement (130ʺʺ) peut être amené en action par un déplacement de l'élément de palier (22) de la position de pivotement (S) en direction de la position de fixation (F) jusqu'à une position de positionnement (P).

29. Attelage selon la revendication 28, **caractérisé en ce que** le dispositif de prépositionnement (130ʺʺ) comprend deux éléments de positionnement (224, 228) pouvant être mis en prise à complémentarité de formes par le déplacement dans la position de positionnement (P).

30. Attelage selon la revendication 28 ou 29, **caractérisé en ce que** le dispositif de prépositionnement (130ʺʺ) comprend une unité de déplacement (80) qui déclenche automatiquement un déplacement de l'élément de palier (22) dans la position de positionnement (P) lorsque la position de rotation de l'élément de palier (22) autorise un déplacement de l'élément de palier (22) dans la position de positionnement (P).

31. Attelage selon la revendication 30, **caractérisé en ce que** le dispositif de prépositionnement (130ʺʺ) déclenche le déplacement de l'élément de palier (22) dans la position de positionnement (P) lorsque la position de rotation de l'élément de palier (22) se trouve dans une zone de capture (WB).

32. Attelage selon l'une quelconque des revendications 28 à 31, **caractérisé en ce que** le dispositif de prépositionnement (130ʺʺ) présente une unité de commande (226) qui commande le dispositif de déplacement (80) pour le déplacement de l'élément de palier (22) dans la position de positionnement (P).

33. Attelage selon l'une quelconque des revendications précédentes, **caractérisé en ce qu'**un dispositif d'orientation (160) est prévu, avec lequel l'élément de palier (22) peut être amené pour la mise en action du dispositif de fixation à complémentarité de formes (60) dans la première position à complémentarité de formes (FSa).

34. Attelage selon la revendication 33, **caractérisé en ce que** le dispositif d'orientation (160) est réalisé de telle manière qu'il autorise, en conservant la première position à complémentarité de formes (FSa), un déplacement de l'élément de palier (22) en direction (32) de la position de fixation (F).

35. Attelage selon l'une quelconque des revendications précédentes, **caractérisé en ce qu'**un dispositif d'orientation (160) est prévu, avec lequel l'élément de palier (22) peut être amené pour la mise en action du dispositif de fixation à complémentarité de formes (60) dans la seconde position à complémentarité de formes (FSb).

36. Attelage selon la revendication 35, **caractérisé en ce que** le dispositif d'orientation (160) est réalisé de telle manière qu'il autorise, en conservant la seconde position à complémentarité de formes (FSb), un déplacement de l'élément de palier (22) en direction (32) de la position de fixation (F).

37. Attelage selon l'une quelconque des revendications 33 à 36, **caractérisé en ce que**, lors d'un déplacement de l'élément de palier (22) se trouvant dans la position d'extrémité (Ea, Eb) respective de la position de pivotement (S) en direction de la position de fixation (F), le dispositif d'orientation (160) est actif avant que le dispositif de prépositionnement (130) ne perde son action.

38. Attelage selon l'une quelconque des revendications 33 à 37, **caractérisé en ce que** le dispositif d'orientation (160) est réalisé de telle manière que, lors de la transition de l'élément de palier (22) de la position de fixation (F) dans la position de pivotement (S), l'élément de palier (22) atteint la position de libération (FG).

39. Attelage selon l'une quelconque des revendications 33 à 38, **caractérisé en ce que** le dispositif d'orientation (160) comprend, pour la prédéfinition de chacune des positions à complémentarité de formes (FS), un élément d'orientation (164, 162) et une surface d'orientation (168, 202a, b) pouvant être posée sur celui-ci.

40. Attelage selon la revendication 39, **caractérisé en ce que** la surface d'orientation (168, 202a, b) peut être posée par un déplacement de pivotement soumis à la force de gravité de l'élément de palier (22) contre l'élément d'orientation (164, 182).

41. Attelage selon l'une quelconque des revendications 33 à 40, **caractérisé en ce que** la surface d'orientation (168, 168', 168ʺʺ, 202a, b, 228) est formée par une paroi d'un évidement (162, 162', 162ʺʺ, 202a, b, 62).

42. Attelage selon l'une quelconque des revendications 33 à 40, **caractérisé en ce que** la surface d'orientation (168, 168', 168"", 228) s'aligne sur une zone partielle d'un élément à complémentarité de formes (62) du dispositif de fixation à complémentarité de formes (60).

43. Attelage selon l'une quelconque des revendications 33 à 42, **caractérisé en ce que** l'élément de palier (22) peut pivoter avec le dispositif d'orientation (160', 160ʺʺ) en direction de la position à complémentarité de formes (FS) respective.

44. Attelage selon l'une quelconque des revendications 33 à 41, **caractérisé en ce que** le dispositif d'orientation (160ʺʺ) est actif aussi en tant que dispositif de prépositionnement (130'''').

45. Attelage selon l'une quelconque des revendications précédentes, **caractérisé en ce que** le dispositif de fixation à complémentarité de formes (60) présente au moins un premier (62), agencé au niveau de l'élément de palier (22), et au moins un second, agencé au niveau du logement de palier (10), élément à complémentarité de formes (64) et que le premier (62) et le second élément à complémentarité de formes (64) peuvent venir en prise l'un avec l'autre par un déplacement relatif de ceux-ci en direction (32) de l'axe de pivotement (20).

46. Attelage selon la revendication 45, **caractérisé en ce que** le premier et le second élément à complémentarité de formes (62, 64) sont réalisés de telle manière que ceux-ci puissent être mis en prise à complémentarité de formes dans la position à complémentarité de formes (FS) respective.

47. Attelage selon la revendication 46, **caractérisé en ce que** le premier et le second élément à complémentarité de formes (62, 64) sont réalisés de telle manière que ceux-ci puissent venir en prise sans jeu l'un avec l'autre dans la position à complémentarité de formes (FS) respective.

48. Attelage selon l'une quelconque des revendications précédentes, **caractérisé en ce que** le dispositif de fixation à complémentarité de formes (60) est réalisé de sorte que, par le déplacement de l'élément de palier (22) par rapport au logement de palier (10), le premier et le second élément à complémentarité de formes (62, 64) puissent venir en prise l'un avec l'autre.

49. Attelage selon l'une quelconque des revendications 3 à 48, **caractérisé en ce que** le dispositif de déplacement (80) présente une broche (82) et un écrou de broche (88).

50. Attelage selon la revendication 49, **caractérisé en ce que** la broche (82) est raccordée de manière fixe en rotation à l'élément de palier (22) et l'écrou de broche (88) est logé de manière rotative au niveau du logement de palier (10), toutefois de manière immobile en direction (32) de l'axe (20).

51. Attelage selon la revendication 50, **caractérisé en ce que** l'écrou de broche (88) peut être entraîné par un entraînement (100).

52. Attelage selon la revendication 51, **caractérisé en ce que** l'entraînement (100) comprend des éléments d'engrenage (126) coopérant par autoblocage.

53. Attelage selon la revendication 51 ou 52, **caractérisé en ce que** l'entraînement (100) comprend un moteur (116).
